# EUROPEAN PATENT SPECIFICATION

(11) **EP 2 863 158 B1**
(45) Date of publication and mention of the grant of the patent: **21.06.2017**
(21) Application number: 12885832.1
(22) Date of filing: 28.09.2012
(51) Int. Cl.: F28D 20/00, F24F 5/00, F16L 5/02, F16L 5/06, F25B 13/00, F28F 9/013, F25B 49/02, F28D 7/08, F28D 20/02

(54) **HEAT STORAGE HEAT EXCHANGE DEVICE**
WÄRMESPEICHENDE WÄRMETAUSCHVORRICHTUNG
DISPOSITIF D'ÉCHANGE DE CHALEUR À STOCKAGE DE CHALEUR

(43) Date of publication of application: 22.04.2015
(73) Proprietor: Daikin Industries, Ltd., Osaka-shi, Osaka 530-8323 (JP); Daikin Europe N.V., 8400 Oostende (BE)
(72) Inventor: HONDA, Masahiro, Osaka-shi, Osaka 530-8323 (JP); KOBA, Kouhei, Osaka-shi, Osaka 530-8323 (JP)
(74) Representative: Global IP Europe Patentanwaltskanzlei
(86) International application number: PCT/JP2012/075090
(87) International publication number: WO 2014/049834

(56) References cited:
- DE-A1-102004 040 661
- JP-A- S57 129 991
- JP-A- S57 129 991
- JP-A- 2001 280 549
- JP-A- 2005 321 118
- JP-A- 2005 321 118
- US-A- 3 410 338
- US-A- 4 140 173

## Description

### TECHNICAL FIELD

The present invention relates to a heat storage heat exchange device.

### BACKGROUND ART

A heat storage device, where a heat storing material such as a phase change material (PCM) which involves phase change between a solid and a liquid is adopted, is proposed in the background art as shown in, for example, Patent document 1 (Japanese Unexamined Patent Application Publication No. 2008-64372).

A configuration is proposed in this heat storage device where there is a focus on changes in volume which are generated during phase change of the heat storing material and warping of a structural material in the surroundings which is caused due to the changes in volume is absorbed. In detail, it is proposed that warping is absorbed by a heat storing material which is in blocks being arranged separately to the surrounding of a heat storage heat exchanger and a filling liquid being arranged between the heat storing material which is in blocks and the heat storage heat exchanger.

JP 2005-321118A discloses the preamble of independent claim 1.

### SUMMARY OF THE INVENTION

### <Problems to be Solved by the Invention>

As described above, the aim of the heat storage device described in PTL 1 (Japanese Unexamined Patent Application Publication No. 2008-64372) is to reduce warping which is generated in accompaniment with phase changes in the heat storing material, but thermal stress, which is imparted to a connection portion between refrigerant piping which extends out from the heat storage heat exchanger and a casing which is filled with the heat storing material, is not considered.

For example, when high temperature refrigerant is sent to the heat storage heat exchanger and changes from a state where heat storing is not performed to a state during heat storing, there is a change to a state where thermal stress is imparted to the connection portion between the refrigerant piping and the casing due to the heat storage heat exchanger and the refrigerant piping thermally expanding. Then, this thermal stress is repeatedly imparted each time that switching is repeated between a state where heat storing is not performed to a state during heat storing.

In contrast to this, in a case where a configuration where it is possible for the thermal stress to escape is adopted, sealing of the heat storing material in the casing is damaged and it is easy for deterioration of the heat storing material or leaking of the heat storing material to be generated.

The present invention is carried out in consideration of these points and the object of the present invention is to provide a heat storage heat exchange device where it is possible to reduce thermal stress which is imparted to a connection portion of a casing and refrigerant piping which is connected to a heat storage heat exchanger while maintaining sealing of heat storing material in the casing.

### <Means to Solve the Problems>

A heat storage heat exchange device according to the appended claim 1 is provided with a casing, a heat storage heat exchanger, a heat storing material, refrigerant piping, and a sealing member. A piping attachment opening is formed in the casing. The heat storage heat exchanger is arranged at an inner section of the casing. The heat storing material is provided in an inner section of the casing at an outer side of the heat storage heat exchanger. The refrigerant piping is connected with the heat storage heat exchanger and extends from an inner section of the casing to an outer section of the casing by passing through the piping attachment opening in the casing. The sealing member seals between the piping attachment opening in the casing and the refrigerant piping. The refrigerant piping is not fixed with regard to the sealing member and is provided so that movement in a direction of passing through the pipe attachment opening in the casing is free.

The heat storage heat exchange device according to the appended claim 1 is the heat storage heat exchange device where the heat storing material has a melting point where phase change is generated between a solid and a liquid during storing heat and releasing heat in the heat storage heat exchanger.

The heat storage heat exchange device according to the appended claim 1 is the heat storage heat exchange device where the heat storage heat exchanger has a plurality of straight pipes which extends in a vertical direction and a U pipe which connects upper end sections of the straight pipes. An upper end of the U pipe in the heat storage heat exchanger is positioned above an upper end section of the heat storing material at least in a case where the heat storing material is in a solid state. Here, in a case where the heat storing material is in a liquid state, the upper end of the U pipe in the heat storage heat exchanger may be positioned above an upper end section of the heat storing material which is liquid or may be positioned below an upper end section of the heat storing material which is liquid.

In this heat storage heat exchange device, it is possible to store heat in the heat storing material which is provided on the outer side of the heat storage heat exchanger and it is possible to use heat from the heat storing material due to refrigerant passing through the refrigerant piping and an inner section of the heat storage heat exchanger. Here, thermal expansion and thermal contraction are generated in the heat storage heat exchanger and the refrigerant piping which is connected to the heat storage heat exchanger due to being caused by changes in temperature of refrigerant which flows in an inner section or changes in temperature of the heat storing material during storing heat in the heat storing material or releasing heat from the heat storing material. For this reason, a portion, which passes through the piping attachment opening in the casing in order to extend from an inner section of the casing to an outer section of the casing, out of the refrigerant piping tends to move to an outer side of the casing due to thermal expansion and tends to move to an inner side of the casing due to thermal contraction. With regard to this, the heat storage heat exchange device is provided so that the refrigerant piping is not fixed with regard to the sealing member and is provided so that movement in a direction of passing through the pipe attachment opening in the casing is free. For this reason, it is possible for thermal stress to escape so that thermal stress is not concentrated in the vicinity of the piping attachment opening in the casing even in cases where thermal expansion or thermal contraction is generated in the heat storage heat exchanger and the refrigerant piping. Due to this, it is possible for damage to the heat storage heat exchanger and the refrigerant piping to be suppressed to be minimal even in a case where heat storing and heat releasing are repeated. Furthermore, between the piping attachment opening in the casing and the refrigerant piping is sealed using the sealing member while a configuration is adopted where thermal stress escapes in this manner. For this reason, it is possible to reduce deterioration or leaking of the heat storing material which is provided in an inner section of the casing.

Due to the above, it is possible to reduce thermal stress which is imparted to a connection portion of the refrigerant piping and the casing with the sealing member in between while maintaining sealing of the heat storing material in the casing.

In this heat storage heat exchange device, there is a concern that the length of movement of the refrigerant piping with regard to the piping attachment opening in the casing is longer when thermal expansion or thermal contraction is generated in the heat storage heat exchanger and the refrigerant piping in a state where the heat storing material changes phase and becomes a solid. With regard to this, it is possible to reduce thermal stress which is imparted to the connection portion of the refrigerant piping and the casing with the sealing material in between in the heat storage heat exchange device even in a case where the length of movement of the refrigerant piping with regard to the piping attachment opening in the casing is longer due to using the heat storing material which changes phases.

In addition, there are times when the refrigerant piping moves with regard to the piping attachment opening in the casing due to being caused by changes in volume in a case of using the heat storing material where the volume changes due to phase changes. With regard to this, it is possible to reduce thermal stress which is imparted to the connection portion of the refrigerant piping and the casing with the sealing material in between in the heat storage heat exchange device even in a case where the length of movement of the refrigerant piping with regard to the piping attachment opening in the casing is longer due to using the heat storing material where the volume changes due to phase changes.

In this heat storage heat exchange device, the heat storage heat exchanger is configured to have the plurality of straight pipes which extend in the vertical direction. For this reason, it is easy for the U pipe which is provided to connect the upper ends of each of the straight pipes to move vertically upward due to thermal expansion.

With regard to this, in this heat storage heat exchange device, the upper end of the U pipe in the heat storage heat exchanger is arranged so as to be positioned above the upper section end of the heat storing material in a case where the heat storing material is in a solid state. For this reason, it is difficult for upward movement of the U pipe to be impeded due to the heat storing material since the heat storing material which is solid is not above the U pipe even when, for example, the heat storing material is solid in a case where the upper end of the U pipe tends to move upward due to a portion of the straight pipes in the heat storage heat exchanger thermally expanding. Due to this, it is possible to reduce warping which is generated when the heat storage heat exchanger thermally expands.

A heat storage heat exchange device according to a second aspect is the heat storage heat exchange device according to the first aspect where the heat storage heat exchanger is configured to be positionally aligned with regard to a portion which is on the opposite side to the side where the piping attachment opening is formed in the casing.

In this heat storage heat exchange device, the heat storage heat exchanger and the casing are positionally aligned at portion on the opposite side to the side where the piping attachment opening is provided in the casing. For this reason, there is a tendency for the length of thermal expansion or the length of thermal contraction to be longer from the positionally aligned position toward the side where the piping attachment opening is provided in the casing in a case where the heat storage heat exchanger thermally expands or thermally contracts. In this manner, it is possible to reduce thermal stress which is imparted to the connection portion of the refrigerant piping and the casing with the sealing material in between even in a case where the length of movement with regard to the piping attachment opening at a portion, which passes through the piping attachment opening in the casing, out of the refrigerant piping is longer.

A heat storage heat exchange device according to a third aspect is the heat storage heat exchange device according to any one of the first aspect to the second aspect where the tangential direction of an opening surface of the piping attachment opening in the casing is the vertical direction. The refrigerant piping has a cylindrical portion which includes a portion extended vertically upward to pass through the piping attachment opening in the casing and a portion extended vertically downward to pass through the piping attachment opening in the casing.

In this heat storage heat exchange device, it is possible to reduce thermal stress which is imparted to the connection portion of the refrigerant piping and the casing with the sealing material in between and to favorably maintain sealing between the refrigerant piping and the piping attachment opening in the casing since there are no changes in the distance between the sealing member and the outer circumference surface of the refrigerant piping even when the refrigerant piping moves in an axial direction with regard to the piping attachment opening due to the heat storage heat exchanger and the refrigerant piping thermally expanding or thermally contracting.

A heat storage heat exchange device according to a fourth aspect is the heat storage heat exchange device according to any one of the first aspect to the third aspect where the heat storing material and at least a portion of the outer surface of the heat storage heat exchanger are arranged to directly contact.

In this heat storage heat exchange device, since the heat storing material and the heat storage heat exchanger are in detect contact, there is a tendency for the length of movement of the refrigerant piping with regard to the piping attachment opening in the casing to be longer due to the heat storage heat exchanger thermally expanding or thermally contracting particularly in a case where the heat storing material is in a solid state. With regard to this, it is possible to reduce thermal stress which is imparted to the connection portion of the refrigerant piping and the casing with the sealing material in between in this heat storage heat exchange device even in a case where the length of movement of the refrigerant piping with regard to the piping attachment opening in the casing is longer due to thermally expansion or thermally contraction being generated in the heat storage heat exchanger and the refrigerant piping in a case where the heat storing member is in a solid state.

A heat storage heat exchange device according to a fifth aspect is the heat storage heat exchange device according to any one of the first aspect to the fourth aspect where the sealing member is a rubber member with a shape so as to pinch an edge of the piping attachment opening in the casing in a plate thickness direction. There is further provided a stopper member fixed with regard to the surroundings of a portion of the refrigerant piping which is positioned in an inner section of the casing and the surroundings of another portion of the refrigerant piping which is positioned in an outer section of the casing and configured to abut on the rubber member when the refrigerant piping moves in a direction of passing through the piping attachment opening in the case. Here, the rubber which configures the rubber member is not particularly limited, but it is preferable that the rubber has higher elasticity than, for example, the material which configures the casing, and natural rubbers and synthetic rubbers such as styrene butadiene rubber, butadiene rubber, and isoprene rubber are included.

Since the stopper member which is fixed to the refrigerant piping is further provided in this heat storage heat exchange device, it is possible for thermal stress to be released to a portion, which is in the surroundings of the piping attachment opening, so that thermal stress is not imparted locally with regard to the refrigerant piping by using the elastic force of the rubber member even in a case where it is assumed that the heat storage heat exchanger and the refrigerant piping thermally expand or thermal contract to an extent that the stopper member abuts with the rubber member.

### <Advantageous Effects of Invention>

In the heat storage heat exchanger according to the appended claim 1, it is possible to reduce thermal stress which is imparted to the connection portion of the refrigerant piping and the casing with the sealing member in between while maintaining sealing of the heat storing material in the casing.

In the heat storage heat exchanger according to the appended claim 1, it is possible to reduce thermal stress which is imparted to the connection portion of the refrigerant piping and the casing with the sealing material in between in the heat storage heat exchange device even in a case where the length of movement of the refrigerant piping with regard to the piping attachment opening in the casing is longer due to using the heat storing material which changes phases.

In the heat storage heat exchanger according to the appended claim 1, it is possible to reduce warping which is generated when the heat storage heat exchanger thermally expands.

In the heat storage heat exchanger according to the second aspect, it is possible to reduce thermal stress which is imparted to the connection portion of the refrigerant piping and the casing with the sealing material in between even in a case where the length of movement with regard to the piping attachment opening at a portion, which passes through the piping attachment opening in the casing, out of the refrigerant piping is longer.

In the heat storage heat exchanger according to the third aspect, it is possible to reduce thermal stress which is imparted to the connection portion of the refrigerant piping and the casing with the sealing material in between and to favorably maintain sealing between the refrigerant piping and the piping attachment opening in the casing.

In the heat storage heat exchanger according to the fourth aspect, it is possible to reduce thermal stress which is imparted to the connection portion of the refrigerant piping and the casing with the sealing material in between in this heat storage heat exchange device even in a case where the length of movement of the refrigerant piping with regard to the piping attachment opening in the casing is longer due to thermally expansion or thermally contraction being generated in the heat storage heat exchanger and the refrigerant pipes in a case where the heat storing member is in a solid state.

In the heat storage heat exchanger according to the fifth aspect, it is possible for thermal to be released to a portion, which is in the surroundings of the piping attachment opening.

### BRIEF DESCRIPTION OF THE DRAWINGS

[Fig. 1] Fig. 1 is a schematic diagram of an air conditioner according to a first embodiment of the present invention.
[Fig. 2] Fig. 2 is a schematic arrangement configuration diagram of an upper surface view of an outer unit.
[Fig. 3] Fig. 3 is a schematic arrangement configuration diagram of a front surface view of a heat storage device.
[Fig. 4] Fig. 4 is a schematic arrangement configuration diagram of a side surface of a heat storage heat exchanger.
[Fig. 5] Fig. 5 is a schematic diagram illustrating the flow of refrigerant during driving for cooling.
[Fig. 6] Fig. 6 is a schematic diagram illustrating the flow of refrigerant during driving for heating.
[Fig. 7] Fig. 7 is a schematic diagram illustrating the flow of refrigerant during driving for heating and heat storage.
[Fig. 8] Fig. 8 is a schematic diagram illustrating the flow of refrigerant during driving for heating and defrosting.
[Fig. 9] Fig. 9 is a perspective diagram for describing a support structure of a gas refrigerant connection piping and a heat storage vessel.
[Fig. 10] Fig. 10 is a side surface view diagram for describing a support structure for gas refrigerant connection piping and a heat storage vessel.
[Fig. 11] Fig. 11 is a perspective diagram illustrating the surroundings of a piping attachment opening in a ceiling surface of a heat storage vessel.
[Fig. 12] Fig. 12 is a side surface view diagram illustrating the surroundings of a piping attachment opening in a ceiling surface of a heat storage vessel.
[Fig. 13] Fig. 13 is a side surface view cross sectional diagram illustrating the surroundings of a piping attachment opening in a ceiling surface of a heat storage vessel in a state where gas refrigerant, connection piping moves upward.
[Fig. 14] Fig. 14 is a side surface view cross sectional diagram illustrating the surroundings of a piping attachment opening in a ceiling surface of a heat storage vessel in a state where gas refrigerant connection piping moves downward.
[Fig. 15] Fig. 15 is a side surface view illustrating a state in the vicinity of an upper end of a heat storage heat exchanger when there is no thermal expansion.
[Fig. 16] Fig. 16 is a side surface view illustrating a state in the vicinity of an upper end of a heat storage heat exchanger when there is thermal expansion.

### DESCRIPTION OF EMBODIMENTS

An air conditioner according to embodiments and modified examples will be described below based on the drawings while giving examples. Here, the following description does not limit the present invention.

### (1) Air Conditioner

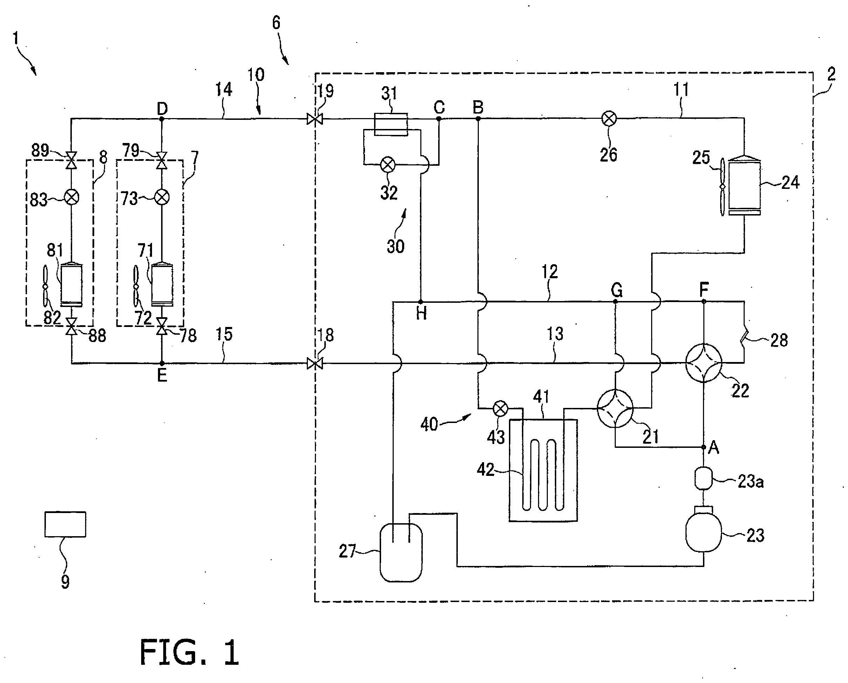

A schematic diagram of a refrigerant circuit of an air conditioner 1 according to the present embodiment is shown in Fig. 1.

The air conditioner 1 according to the present embodiment is for cold regions where the air temperature is below freezing point in winter and the like and is able to not only be driven for cooling and driven for heating but also be driven for heating and heat storage and driven for heating and defrosting.

The air conditioner 1 has a control device 9 and a refrigerant circuit 6 which is configured by connecting a plurality of indoor units 7 and 8 with regard to an outdoor unit 2. The refrigerant circuit 6 is provided with a main circuit 10, a super cooling circuit 30, and a heat storage circuit 40.

### (1-1) Main Circuit

The main circuit 10 mainly has a compressor 23, an oil divider 23a, a first four-way switching valve 21, a second four-way switching valve 22, an outdoor heat exchanger 24, an outdoor expansion valve 26, indoor expansion valves 73 and 74, indoor heat exchangers 71 and 81, liquid refrigerant linking piping 14, gas refrigerant linking piping 15, outdoor liquid refrigerant piping 11, outdoor gas refrigerant piping 13, suction piping 12, and an accumulator 27.

The suction piping 12 is connected with the suction side of the compressor 23 and the first four-way switching valve 21 and the second four-way switching valve 22 are connected with the discharge side of the compressor 23 via the oil divider 23a. The accumulator 27 is provided in the middle of the suction piping 12. One end of a capillary tube 28 is connected to an end section of the suction piping 12 on the opposite side to the compressor 23 connection side. The second four-way switching valve 22 is connected with the refrigerant piping which branches from point A between the oil divider 23a and the first four-way switching valve 21.

The first four-way switching valve 21 has a first connection section at the point A with the oil divider 23a described above, a second connection section with the outdoor heat exchanger 24, a third connection section at point G in the middle of the suction piping 12, and a fourth connection section with the heat storage circuit 40 described above. It is possible for the first four-way switching valve 21 to switch between a state where the first connection section and the second connection section are connected and the third connection section and the fourth connection section are connected and a state where the first connection section and the fourth connection section are connected and the second connection section and the third connection section are connected.

The second four-way switching valve 22 has a first connection section at the point A with the oil divider 23a described above, a second connection section with the other end of the capillary tube 28, a third connection section at point F in the middle of the suction piping 12, and a fourth connection section with the outdoor gas refrigerant piping 13. It is possible for the second four-way switching valve 22 to switch between a state where the first connection section and the second connection section are connected and the third connection section and the fourth connection section are connected and a state where the first connection section and the fourth connection section are connected and the second connection section and the third connection section are connected independently to the connection state of the first four-way switching valve 21.

The outdoor liquid refrigerant piping 11 is connected to the outdoor heat exchanger 24 on the opposite side to the first four-way switching valve 21 side. The outdoor expansion valve 26 is provided in the middle of the outdoor liquid refrigerant piping 11. The liquid refrigerant linking piping 14 is connected to an end section of the outdoor liquid refrigerant piping 11 on the opposite side to the outdoor heat exchanger 24 side via the outdoor liquid closing valve 19 of the outdoor unit 2.

The liquid refrigerant linking piping 14 on the opposite side to the outdoor unit 2 side branches at point D to a piping section toward the indoor unit 7 and a refrigerant piping section toward the indoor unit 8 and is connected with indoor liquid closing valves 79 and 89 which are respectively in the indoor units 7 and 8. The refrigerant piping which extends from the indoor liquid closing valve 79 is connected to one side of the indoor heat exchanger 71 via the indoor expansion valve 73. The other side of the indoor heat exchanger 71 is connected at point E with the gas refrigerant linking piping 15 via an indoor gas closing valve 78. The refrigerant piping which extends from the indoor liquid closing valve 89 is connected to one side of the indoor heat exchanger 81 via the indoor expansion valve 83 in the same manner. The other side of the indoor heat exchanger 81 is connected at point E with the gas refrigerant linking piping 15 via an indoor gas closing valve 88. The gas refrigerant linking piping 15 is connected with the outdoor gas refrigerant piping 13 via an outdoor gas closing valve 18. Here, as described above, the outdoor gas refrigerant piping 13 on the opposite side to the outdoor gas closing valve 18 side is connected with the fourth connection section of the second four-way switching valve 22.

### (1-2) Super Cooling Circuit

The super cooling circuit 30 is provided in the middle of the outdoor liquid refrigerant piping 11 so as to be connected at point H in the middle of the suction piping 12 by branching from point C between the outdoor expansion valve 26 and the outdoor liquid closing valve 19.

A super cooling heat exchanger 31 is provided between the outdoor liquid closing valve 19 and the point C in the middle of the outdoor liquid refrigerant piping 11.

In addition, a super cooling expansion valve 32 is provided in the middle of the super cooling circuit 30. The super cooling circuit 30 extends to the point H in the suction piping 12 after extending from the point C in the outdoor liquid refrigerant piping 11 to the super cooling expansion valve 32 by passing through an inner section of the super cooling heat exchanger 31.

It is possible for the super cooling circuit 30 to adjust the degree of super cooling of refrigerant which flows in the liquid refrigerant linking piping 14 by adjusting the amount of refrigerant passing through due to the valve opening of the super cooling expansion valve 32 being adjusted during driving for cooling which will be described later.

### (1-3) Heat Storage Circuit

The heat storage circuit 40 is provided so as to connect the fourth connection section on the first four-way switching valve 21 side and the outdoor liquid refrigerant piping 11 at the point B between the point C and the outdoor expansion valve 26.

The refrigerant piping which extend from the fourth connection section of the first four-way switching valve 21 is connected with one end side of the heat storage heat exchanger 42 which is accommodated in an inner section of a heat storage device 41 which will be described later. The refrigerant piping which extends from the connection on the other end side of the heat storage heat exchanger 42 is connected at the point B with the outdoor liquid refrigerant piping 11 via the heat storage expansion valve 43.

It is possible for the heat storage circuit 40 to adjust the amount of heat storing and amount of heat releasing in the heat storage device 41 by, for example, adjusting the valve opening of the heat storage expansion valve 43 during driving for heating and heat storing and during driving for heating and defrosting which will be described later.

The outdoor unit 2 and the indoor units 7 and 8 which are provided in the air conditioner 1 will be described below.

### (2) Outdoor Unit

The outdoor unit 2 mainly has an outdoor unit casing 20, an outdoor fan 25, and the compressor 23, the oil divider 23a, the first four-way switching valve 21, the second four-way switching valve 22, the outdoor heat exchanger 24, the outdoor expansion valve 26, the super cooling circuit 30, the heat storage circuit 40, the outdoor liquid refrigerant piping 11, the outdoor gas refrigerant piping 13, the suction piping 12, the accumulator 27, the outdoor liquid closing valve 19, and the outdoor gas closing valve 18 which are in the refrigerant circuit 6.

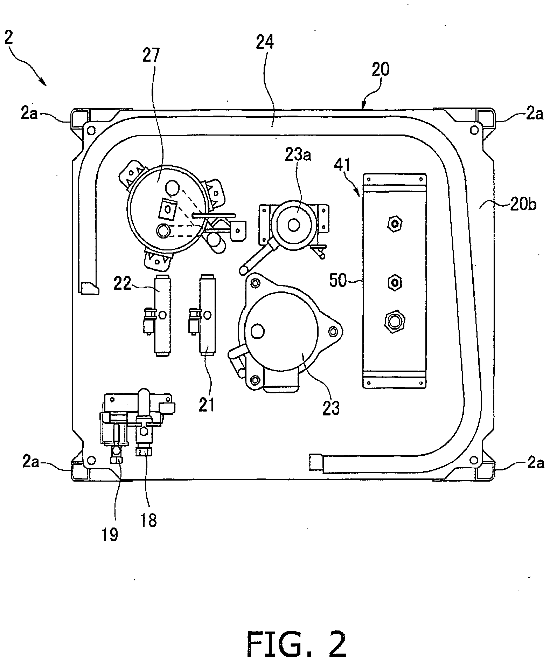

A schematic arrangement configuration diagram of the main elements of an upper surface view of the outer unit 2 is shown in Fig. 2.

The outdoor unit casing 2 has a bottom surface 20b and four side surfaces and a ceiling surface which are not shown in the diagrams and is configured to substantially have a rectangular cubic shape. Support pillars 2a which extend vertically upward are provided in each of the four corners of the bottom surface 20b in an upper surface view.

The outdoor heat exchanger 24 is arranged so that a cylindrical shape where a portion is cut away extends in the vertical direction and the outdoor heat exchanger 24 completely overlaps with two out of the four side surfaces and roughly half overlaps with the two remaining side surfaces. Here, portions, which oppose the outdoor heat exchanger 24, in each of the side surface of the outdoor unit casing 20 are configured so that a flow of air is taken in from the outside side to the inner side. Below the outdoor heat exchanger 24 is roughly covered using the bottom surface 20b of the outdoor unit casing 20 and above the outdoor heat exchanger 24 is open. Here, although not shown in Fig. 2, the outdoor fan 25 is a propeller fan which is arranged in the space above the outdoor heat exchanger 24 so that the axial direction is the vertical direction and it is possible for a flow of air to be formed from an inner section of the outdoor unit casing 20 which is below to an outer section of the outdoor unit casing 20 which is above.

As shown in Fig. 2, the outdoor gas closing valve 18 and the outdoor liquid closing valve 19 are arranged in the vicinity of corners where the outdoor heat exchanger 24 described above does not exist. The outdoor gas closing valve 18 and the outdoor liquid closing valve 19 are positioned on the front surface side of the outdoor unit casing 20 at the connection sections with the gas refrigerant linking piping 15 and the liquid refrigerant linking piping 14.

In addition, as shown in Fig. 2, the accumulator 27, the first four-way switching valve 21, the second four-way switching valve 22, the compressor 23, and the oil divider 23a are arranged in the outdoor unit casing 20 close to a region where the outdoor gas closing valve 18 and the outdoor liquid closing valve 19 described above are arranged.

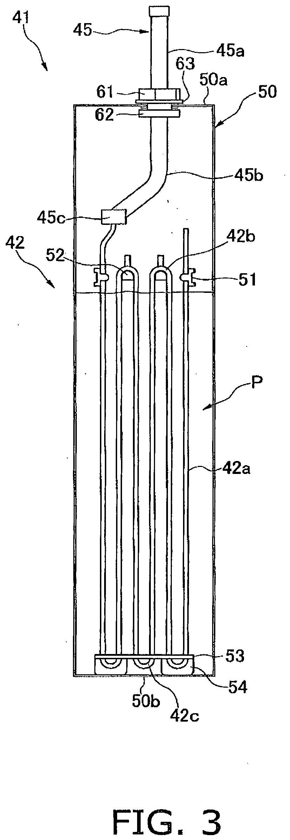

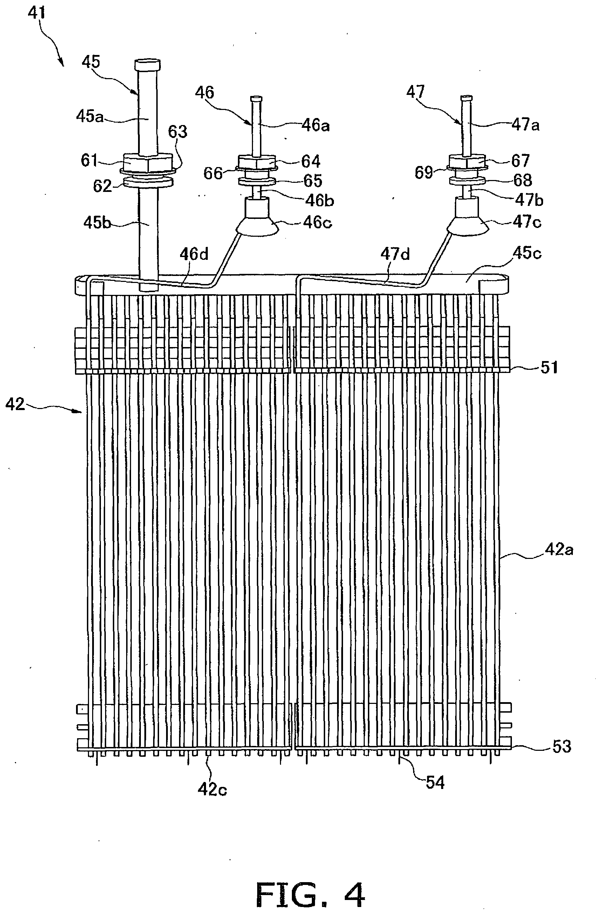

In addition, as shown in Fig. 2, the heat storage device 41 is arranged in the outdoor heat exchanger 24 between the compressor 23 and the oil divider 23a on the opposite side to the region where the outdoor gas closing valve 18 and the outdoor liquid closing valve 19 are arranged. The heat storage device 41 mainly has a heat storage vessel 50, the heat storage heat exchanger 42, a gas refrigerant connection piping 45, a first liquid refrigerant connection piping 46, a second liquid refrigerant connection piping 47, and a heat storing material P as shown in a schematic arrangement configuration diagram of a front surface of a heat storage device in Fig. 3 and a schematic arrangement configuration diagram of a side surface of the heat storager in Fig. 4.

The heat storage vessel 50 is a casing with a rectangular cubic shape and is arranged so that a direction from the front surface side to the rear surface side is longer than the left and right direction in an upper surface view as shown in Fig. 2. Here, the heat storage vessel 50 is configured so that the length in the vertical direction is longer than the length in a direction from the front surface side to the rear surface side. The heat storage vessel 50 is configured to have a ceiling surface 50a, a bottom surface 50b, and four side surfaces. The heat storage vessel 50 is mainly formed using resin and polypropylene is adopted in the present embodiment. The heat storing material P is filled into a space in an inner section of the heat storage vessel 50 so that the space above is open. Here, a heat insulting material such as styrene foam is arranged between the heat storage vessel 50 and the heat storing material P but is not shown in the diagrams. In addition, the heat storage heat exchanger 42 is arranged so that outer surfaces of each section excluding an upper end portion directly contact with the heat storing material P. The heat storage vessel 50 is fastened and fixed to the bottom surface 20b of the outer unit casing 20 using a bolt so that a lower surface of the bottom surface 50b of the heat storage vessel 50 touches with an upper surface of the bottom surface 20b of the outdoor unit casing 20.

The heat storing material P is a heat storing material where phase change is generated in accompaniment with change in the temperature of refrigerant which flows in the heat storage heat exchanger 42 when the air conditioner 1 of the present embodiment performs each type of driving which will be described later. The heat storing material P stores heat by becoming a liquid state due to melting when heat is obtained and becomes a solid state due to solidifying by releasing heat. The volume of the heat storing material P is different in the liquid state and in the solid state, and the volume is smaller in the solid state than in the liquid state. Although not particularly limited, the heat storing material P of the present embedment is a heat storing material where polyethylene glycol is dissolved in water and it is possible to accumulate heat as latent heat with a melting point in the range of approximately 30°C to 40°C. Here, the heat storing material P in the present embodiment has properties such that the volume is smaller when solidifying from a liquid state to a solid state.

The heat storage heat exchanger 42 is arranged so that the vertical direction is the longitudinal direction. The heat storage heat exchanger 42 has a plurality of heat transfer pipes 42a which extend parallel to each other in the vertical direction, an upper end U pipe 42b which connects portions of the upper ends of some of the plurality of heat transfer pipes 42a so as to be folded back, and a lower end U pipe 42c which connects portions of the lower ends of some of the plurality of heat transfer pipes 42a so as to be folded back. One end side of the heat storage heat exchanger 42 is connected to one of the gas refrigerant connection piping 45 via a header 45c. The other end side of the heat storage heat exchanger 42 is connected to the first liquid refrigerant connection piping 46 and the second liquid refrigerant connection piping 47 which are a plurality of liquid side connection piping. The vicinity of a lower end of the heat storage heat exchanger 42 is fixed in a lower end support member 53 with a shape which spreads out on a horizontal plane. A plurality of ribs 54 which protrude downward extend from the lower surface side of the lower end support member 53. Lower ends of the ribs 54 are supported by abutting with an upper surface of the bottom surface 50b of the heat storage vessel 50. A portion of the upper end U pipe 42b which is in the vicinity of an upper end of the heat storage heat exchanger 42 are supported using an inner side support member 52 which is formed with a rod shape so that portion on the inner sides of upper ends of a plurality of the upper end U pipes 42b are supported from below. Both ends of the inner side support member 52 in the longitudinal direction are supported by side surfaces of the heat storage vessel 50. In addition, the vicinity of upper ends of a plurality of the heat transfer pipes 42a which are arranged on the outer side, where the upper end U pipe 42b is not provided, in the heat storage heat exchanger 42 are supported using an outer side support member 51 which is formed with a rod shape so that these heat transfer pipes 42a are supported so as to be bunched from the outer side. Both ends of the outer side support member 51 in the longitudinal direction are supported by side surfaces of the heat storage vessel 50 in the same manner as the inner side support member 52. The heat storing material P is filled into a space in an outer section of the heat storage heat exchanger 42 which is a space in an inner section of the heat storage vessel 50. Here, the filling amount of the heat storing material P which is filled in is adjusted so that the upper surface of the heat storing material P which is in a solid state is positioned below the upper end of a plurality of the upper end U pipes 42b in the heat storage heat exchanger 42 even in a case where the heat storing material P is in a solid state. Here, it is preferable that the filling amount of the heat storing material P be such that the upper surface of the heat storing material P which is in a solid state is positioned below the upper end on the inner side of a plurality of the upper end U pipes 42b in the heat storage heat exchanger 42. By adjusting the amount of the heat storing material P in this manner, it is possible for it to be difficult for the burden of thermal stress to be applied to the heat storage heat exchanger 42 since it is possible for a portion of the upper end U pipe 42b to move in the up and down direction without being blocked by the heat storing material P which is in a solid state in a case where the heat storage heat exchanger 42 thermally expands or thermally contracts.

The gas refrigerant connection piping 45 is configured using upper section gas piping 45a, lower section gas piping 45b, and the header 45c described above. A portion of the upper end of the plurality of heat transfer tubes 42a in the heat storage heat exchanger 42 is connected to the header 45c as described above. A lower end of the lower section gas piping 45b is connected with the header 45c, an upper end of the lower section gas piping 45b is linked with the upper section gas piping 45a, and the lower section gas piping 45b is positioned in an inner section of the heat storage vessel 50 in a state where driving is stopped. The lower section gas piping 45b is formed so as to extend in the vertical direction by curving back after extending in a diagonal direction. A lower end of the upper section gas piping 45a is linked with an upper end of the lower section gas piping 45b and an upper end of the upper section gas piping 45a is connected with regard to the fourth connection section of the first four-way switching valve 21 via the refrigerant piping. The upper section gas piping 45a is positioned at an outer section of the heat storage vessel 50 in a state where driving is stopped. The gas refrigerant connection piping 45 is supported so that movement in the surroundings of a portion, which passes through the ceiling surface 50a of the heat storage vessel 50 in the vertical direction, in the gas refrigerant connection piping 45 with regard to the axial direction of the upper section gas piping 45a and the lower section gas piping 45b is free with regard to the ceiling surface 50a of the heat storage vessel 50 via a bonding body 62, a nut 61, a washer 63, and a rubber member 55 which will be described later. Here, movement of the upper section gas piping 45a and the lower section gas piping 45b with regard to a radial direction is essentially limited with regard to the ceiling surface 50a of the heat storage vessel 50 except for the elastic shape changing of the rubber member 55 in the radial direction.

The first liquid refrigerant connection piping 46 is configured using first upper section liquid piping 46a, first lower section liquid piping 46b, a first flow divider 46c, and a plurality of first branch piping 46d (which are omitted from the diagram with only one showing in Fig. 4). The first lower section liquid piping 46b is positioned at an inner section of the heat storage vessel 50 in a state where driving is stopped, an upper end of the first lower section liquid piping 46b is linked with the first upper section liquid piping 46a, and a lower end of the first lower section liquid piping 46b is connected with the first flow divider 46c. The plurality of first branch piping 46d extends out from a lower end of the first flow divider 46c. Lower end sides of each of the first branch piping 46d are connected with an upper end section of one of the heat transfer pipes 42a in the heat storage heat exchanger 42. Each of the first branch piping 46d are formed so as to extend in the vertical direction by curving back after extending diagonally downward from below the first flow divider 46 and then extending diagonally upward. A lower end of the first upper section liquid piping 46a is linked with an upper end of the first lower section liquid piping 46b and an upper end of the first upper section liquid piping 46a is connected with regard to the heat storage expansion valve 43 of the heat storage circuit 40 via the refrigerant piping and a header which is not shown in the diagrams. The first upper section liquid piping 46a is positioned at an outer section of the heat storage vessel 50 in a state where driving is stopped. The first liquid refrigerant connection piping 46 is supported so that movement in the surroundings of a portion, which passes through the ceiling surface 50a of the heat storage vessel 50 in the vertical direction, in the first liquid refrigerant connection piping 46 with regard to the axial direction of the first upper section liquid piping 46a and the first lower section liquid piping 46b is free with regard to the ceiling surface 50a of the heat storage vessel 50 via a bonding body 65, a nut 64, a washer 66, and a rubber member which is not shown in the diagrams. Here, movement of the first upper section liquid piping 46a and the first lower section liquid piping 46b with regard to a radial direction is essentially limited with regard to the ceiling surface 50a of the heat storage vessel 50 except for the elastic shape changing of the rubber member in the radial direction.

The second liquid refrigerant connection piping 47 is the same as the first liquid refrigerant connection piping 46. That is, the second liquid refrigerant connection piping 47 is configured using second upper section liquid piping 47a, second lower section liquid piping 47b, a second flow divider 47c, and a plurality of second branch piping 47d (which are omitted from the diagram with only one showing in Fig. 4). The second lower section liquid piping 47b is positioned at an inner section of the heat storage vessel 50 in a state where driving is stopped, an upper end of the second lower section liquid piping 47b is linked with the second upper section liquid piping 47a, and a lower end of the second lower section liquid piping 47b is connected with the second flow divider 47c. The plurality of second branch piping 47d extend out from a lower end of the second flow divider 47c. Lower end sides of each of the second branch piping 47d are connected with an upper end section of one of the heat transfer pipes 42a in the heat storage heat exchanger 42. Each of the second branch piping 47d are formed so as to extend in the vertical direction by curving back after extending diagonally downward from below the second flow divider 47c and then extending in a vertical direction. A lower end of the second upper section liquid piping 47a is linked with an upper end of the second lower section liquid piping 47b and an upper end of the second upper section liquid piping 47a is connected with regard to the heat storage expansion valve 43 of the heat storage circuit 40 via the refrigerant piping and a header which is not shown in the diagrams. The second upper section liquid piping 47a is positioned at an outer section of the heat storage vessel 50 in a state where driving is stopped. The second liquid refrigerant connection piping 47 is supported so that movement in the surroundings of a portion, which passes through the ceiling surface 50a of the heat storage vessel 50 in the vertical direction, in the second liquid refrigerant connection piping 47 with regard to the axial direction of the second upper section liquid piping 47a and the second lower section liquid piping 47b is free with regard to the ceiling surface 50a of the heat storage vessel 50 via a bonding body 68, a nut 67, a washer 69, and a rubber member which is not shown in the diagrams. Here, movement of the second upper section liquid piping 47a and the second lower section liquid piping 47b with regard to a radial direction is essentially limited with regard to the ceiling surface 50a of the heat storage vessel 50 except for the elastic shape changing of the rubber member in the radial direction.

### (3) Indoor Unit

The indoor unit 7 mainly has an indoor fan 72 and the indoor heat exchanger 71, the indoor expansion valve 73, the indoor liquid closing valve 79, and the indoor gas closing valve 78 which are in the refrigerant circuit 6 described above.

In the same manner, the indoor unit 8 mainly has an indoor fan 82 and the indoor heat exchanger 81, the indoor expansion valve 83, the indoor liquid closing valve 89, and the indoor gas closing valve 88 which are in the refrigerant circuit 6 described above.

### (4) Control Device

The control device 9 performs various types of control by controlling the states of the compressor 23, the first four-way switching valve 21, the second four-way switching valve 22, the outdoor fan 25, the outdoor expansion valve 26, the super cooling expansion valve 32, the heat storage expansion valve 43, the indoor expansion valves 73 and 83, and the indoor fans 72 and 82 based on instructions from a controller which is not shown in the diagrams and information identified by various types of sensors.

Here, the control device 9 is not particularly limited and may be configured by being divided into, for example, a controller which is arranged for each of the indoor units 7 and 8, a control section which is provided for the outdoor unit 2, and the like.

### (5) Actions of Air Conditioner

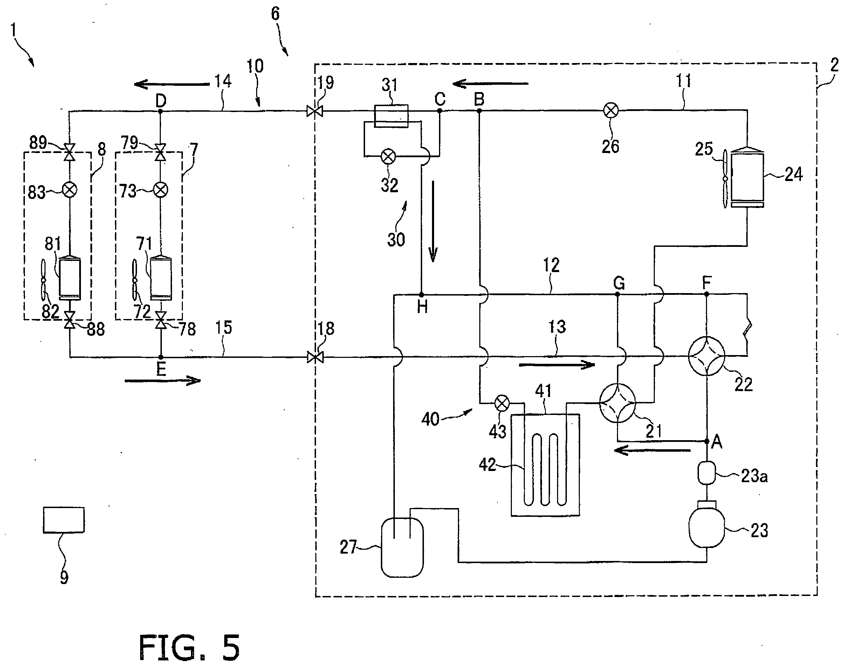

Driving actions of the air conditioner 1 will be described using Fig. 5, Fig. 6, Fig. 7, and Fig. 8 where refrigerant flow directions are shown using arrows. It is possible for the air conditioner 1 to perform driving for cooling, driving for heating, driving for heating and heat storing, and driving for heating and defrosting as described above.

### (5-1) Driving for Cooling

When driving for cooling, driving of the air conditioner 1 is performed with the state for connecting the first four-way switching valve 21 and the second four-way switching valve 22 as the state shown in Fig. 5. That is, in the first four-way switching valve 21, the first connection section and the second connection section are connected and the third connection section and the fourth connection section are connected. In addition, in the second four-way switching valve 22, the first connection section and the second connection section are connected and the third connection section and the fourth connection section are connected. In addition, the heat storage expansion valve 43 of the heat storage circuit 40 is in a fully open state. Here, the degree of opening of the super cooling expansion valve 32 of the super cooling circuit 30 is controlled so that the degree of super cooling of refrigerant which flows in the outdoor liquid refrigerant piping 11 at an output opening of the super cooling heat exchanger 31 is a degree of super cooling which is the target.

When the compressor 23 is activated in a state where the refrigerant circuit 6 is controlled in this manner, gas refrigerant, which is discharged from the compressor 23 at a high temperature and high pressure, is supplied to the outdoor heat exchanger 24 via the first four-way switching valve 21, is condensed, and becomes liquid refrigerant. The refrigerant which passes through the outdoor heat exchanger 24 flows in the liquid refrigerant linking piping 14 in a state where a designated degree of super cooling is applied when passing through the super cooling heat exchanger 31 and is sent to each of the indoor units 7 and 8. The refrigerant which is sent to each of the indoor units 7 and 8 is in a gas-liquid two-phase state due to the pressure being reduced when passing through each of the indoor expansion valves 73 and 83 and evaporates when passing through each of the indoor heat exchangers 71 and 81. The gas refrigerant which evaporates flows in order through the gas refrigerant linking piping 15 and the outdoor gas refrigerant piping 13 and is sent to the suction piping 12 via the second four-way switching valve 22. Out of the refrigerant which flows in the suction piping 12, liquid refrigerant is separated at the accumulator 27, the gas refrigerant is sucked into the compressor 23, and the gas refrigerant is discharged again at a high temperature and high pressure using the compressor 23. In this manner, driving for cooling is performed.

### (5-2) Driving for Heating

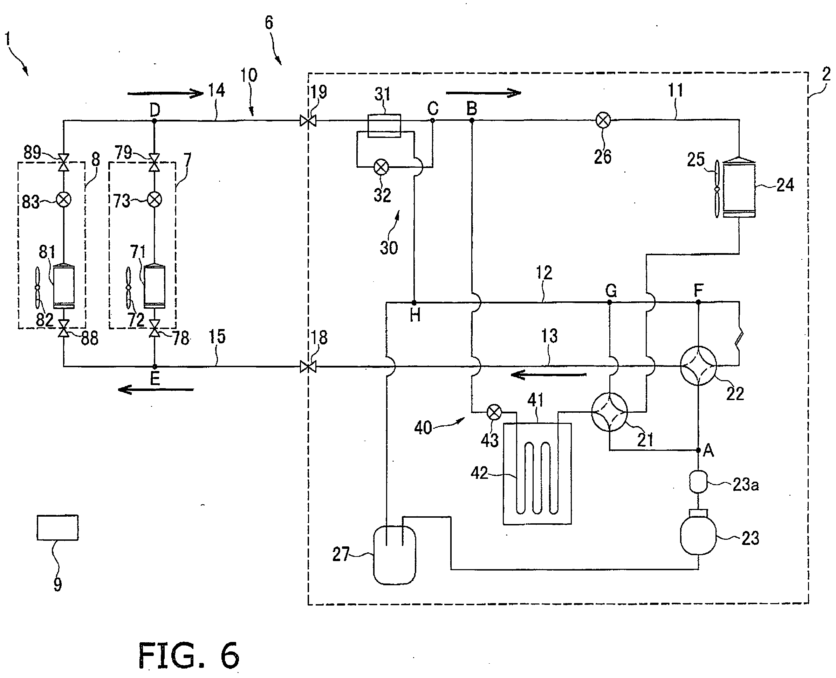

When driving for heating, driving of the air conditioner 1 is performed with the state for connecting the first four-way switching valve 21 and the second four-way switching valve 22 as the state shown in Fig. 6. That is, in the first four-way switching valve 21, the second connection section and the third connection section are connected and the first connection section and the fourth connection section are connected. In addition, in the second four-way switching valve 22, the second connection section and the third connection section are connected and the first connection section and the fourth connection section are connected. The heat storage expansion valve 43 of the heat storage circuit 40 and the super cooling expansion valve 32 of the super cooling circuit 30 are in a state of being fully close.

When the compressor 23 is activated in a state where the refrigerant circuit 6 is controlled in this manner, gas refrigerant, which is discharged from the compressor 23 at a high temperature and high pressure, flows in order through the outdoor gas refrigerant piping 13 and the gas refrigerant linking piping 15 via the second four-way switching valve 22 and is sent to each of the indoor units 7 and 8. The refrigerant which is sent to each of the indoor units 7 and 8 is condensed in each of the indoor heat exchangers 71 and 81 and becomes liquid refrigerant, and flows in order through the liquid refrigerant linking piping 14 and the outdoor liquid refrigerant piping 11. The refrigerant which flows through the outdoor liquid refrigerant piping 11 is in a gas-liquid two-phase state due to the pressure being reduced in the outdoor expansion valve 26 and flows into the outdoor heat exchanger 24. The refrigerant which flows into the outdoor heat exchanger 24 evaporates and is sent to the suction piping 12 via the first four-way switching valve 21. Out of the refrigerant which flows in the suction piping 12, liquid refrigerant is separated at the accumulator 27, the gas refrigerant is sucked into the compressor 23, and the gas refrigerant is discharged again at a high temperature and high pressure using the compressor 23. In this manner, driving for heating is performed.

### (5-3) Driving for Heating and Heat Storing

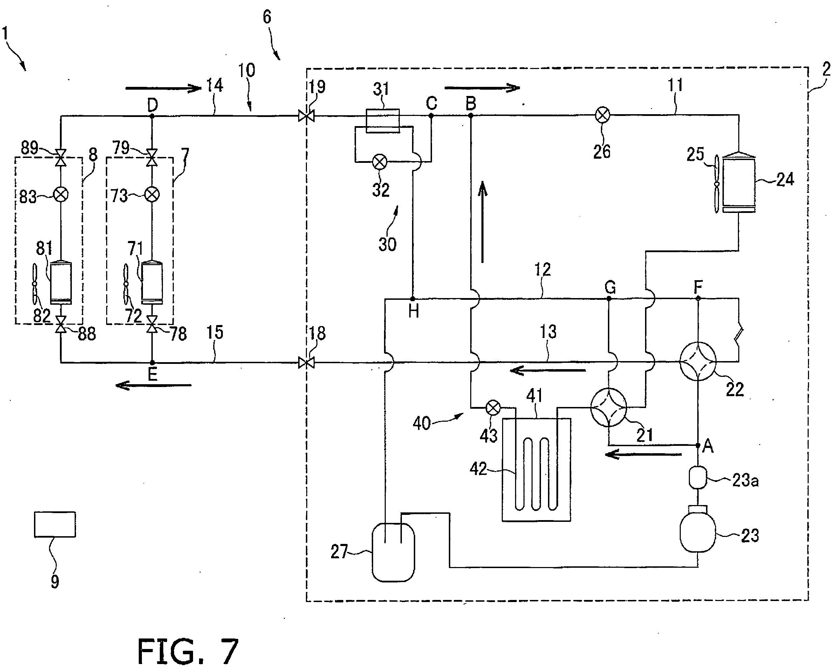

When driving for heating and heat storing, driving of the air conditioner 1 is performed with the state for connecting the first four-way switching valve 21 and the second four-way switching valve 22 as the state shown in Fig. 7 in the same manner as the driving for heating. That is, in the first four-way switching valve 21, the second connection section and the third connection section are connected and the first connection section and the fourth connection section are connected. In addition, in the second four-way switching valve 22, the second connection section and the third connection section are connected and the first connection section and the fourth connection section are connected. The super cooling expansion valve 32 of the super cooling circuit 30 is in a fully close state.

When the compressor 23 is activated in a state where the refrigerant circuit 6 is controlled in this manner, a portion of gas refrigerant, which is discharged from the compressor 23 at a high temperature and high pressure, flows in order through the outdoor gas refrigerant piping 13 and the gas refrigerant linking piping 15 via the second four-way switching valve 22 and is sent to each of the indoor units 7 and 8. The refrigerant which is sent to each of the indoor units 7 and 8 is condensed in each of the indoor heat exchangers 71 and 81 and becomes liquid refrigerant, and flows in order through the liquid refrigerant linking piping 14 and the outdoor liquid refrigerant piping 11. In addition, the remaining gas refrigerant, which is discharged from the compressor 23 at a high temperature and high pressure, flows to the heat storage circuit 40 via the first four-way switching valve 21. The refrigerant which is sent to the heat storage circuit 40 is condensed when passing through the heat storage heat exchanger 42 and becomes liquid refrigerant, and the heat storing material P in the heat storage vessel 50 is melted. At this time, the heat storing material P accumulates heat, which is supplied from high temperature and high-pressure gas refrigerant, mainly as latent heat. The pressure of the refrigerant which passes through the heat storage heat exchanger 42 is reduced at the heat storage expansion valve 43 and the refrigerant merges into the outdoor liquid refrigerant piping 11. Here, the pressure of the refrigerant which flows to merge in the outdoor liquid refrigerant piping 11 is reduced at the outdoor expansion valve 26 and the refrigerant flows into the outdoor heat exchanger 24 in a gas-liquid two-phase state. The refrigerant which flows into the outdoor heat exchanger 24 evaporates and is sent to the suction piping 12 via the first four-way switching valve 21. Out of the refrigerant which flows in the suction piping 12, liquid refrigerant is separated at the accumulator 27, the gas refrigerant is sucked into the compressor 23, and the gas refrigerant is discharged again at a high temperature and high pressure using the compressor 23. In this manner, driving for heating and heat storing is performed.

Here, driving for heating and heat storing is mainly performed when activating the air conditioner 1 and is not particularly limited, and there is a configuration where, for example, there is automatic switching to driving for heating when a temperature sensor (which is not shown in the diagrams), which are provided so that it is possible to detect the temperature of the heat storing material P in the heat storage vessel 50, identifies a temperature which is equal to or more than a predetermined value.

### (5-4) Driving for Heating and Defrosting

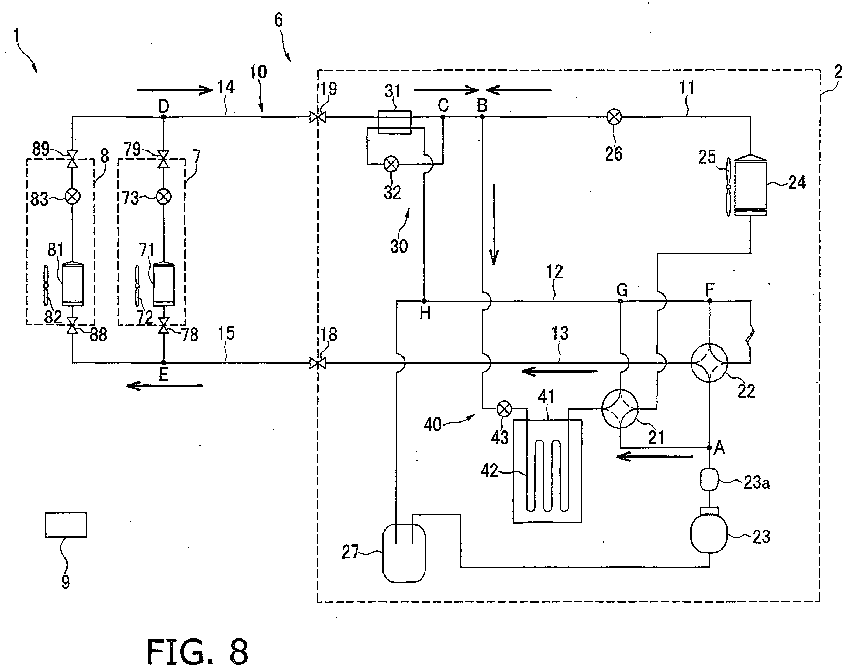

When driving for heating and defrosting, driving of the air conditioner 1 is performed with the state for connecting the first four-way switching valve 21 and the second four-way switching valve 22 as the state shown in Fig. 8. That is, in the first four-way switching valve 21, the first connection section and the second connection section are connected and the third connection section and the fourth connection section are connected. In addition, in the second four-way switching valve 22, the second connection section and the third connection section are connected and the first connection section and the fourth connection section are connected. The super cooling expansion valve 32 of the super cooling circuit 30 is in a fully close state.

When the compressor 23 is activated in a state where the refrigerant circuit 6 is controlled in this manner, a portion of gas refrigerant, which is discharged from the compressor 23 at a high temperature and high pressure, flows in order through the outdoor gas refrigerant piping 13 and the gas refrigerant linking piping 15 via the second four-way switching valve 22 and is sent to each of the indoor units 7 and 8. The refrigerant which is sent to each of the indoor units 7 and 8 is condensed in each of the indoor heat exchangers 71 and 81 and becomes liquid refrigerant, and flows to the point B in the outdoor liquid refrigerant piping 11 via the liquid refrigerant linking piping 14. In addition, the remaining gas refrigerant, which is discharged from the compressor 23 at a high temperature and high pressure, is sent to the outdoor heat exchanger 24 via the first four-way switching valve 21. At this time, frost which is attached to the outdoor heat exchanger 24 is removed using heat from the high temperature refrigerant and the refrigerant which passes in the outdoor heat exchanger 24 condenses. The liquid refrigerant which passes through the outdoor heat exchanger 24 flows to the point B in the outdoor liquid refrigerant piping 11, merges with the refrigerant which flows via the indoor units 7 and 8, and flows to the heat storing circuit 40. The pressure of the refrigerant which is sent to the heat storing circuit 40 is reduced when passing through the heat storage expansion valve 43 and the refrigerant flows into the heat storage heat exchanger 42 in a gas-liquid two-phase state. The refrigerant which flows into the heat storage heat exchanger 42 evaporates by obtaining heat from the heat storing material P. Then, the heat storing material P in the heat storage vessel 50 solidifies due to losing stored heat. The gas refrigerant which passes through the heat storage heat exchanger 42 is sent to the suction piping 12 via the first four-way switching valve 21. Out of the refrigerant which flows in the suction piping 12, liquid refrigerant is separated at the accumulator 27, the gas refrigerant is sucked into the compressor 23, and the gas refrigerant is discharged again at a high temperature and high pressure using the compressor 23. In this manner, driving for heating and defrosting is performed.

Here, driving for heating and defrosting is not particularly limited, and there is a configuration where driving for heating and defrosting is started in a case where designated conditions are satisfied during driving for heating or driving for heating and heat storing, is performed continuously over a designated period of time, and is switched again to driving for heating or driving for heating and heat storing.

### (6) Support Structure for Gas Refrigerant Connection Piping In Heat Storage Vessel

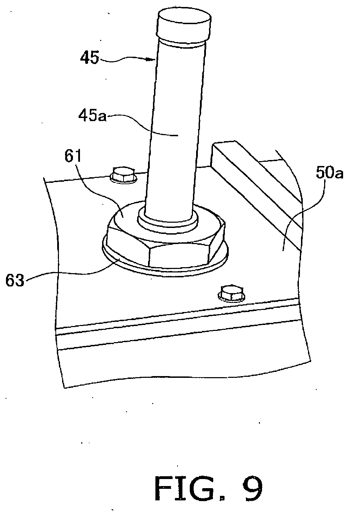

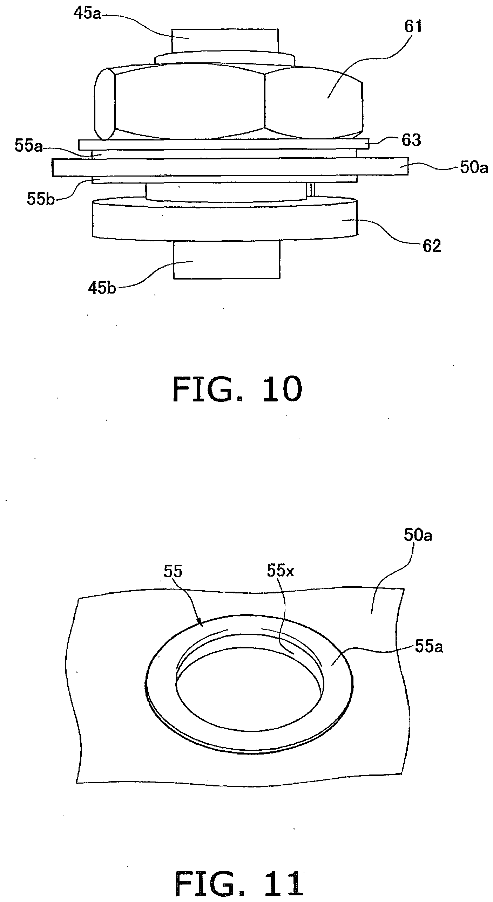

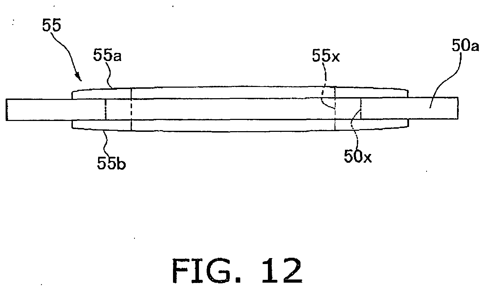

A perspective diagram for describing a support structure between the ceiling surface 50a of the heat storage vessel 50 and the gas refrigerant connection piping 45 in shown in Fig. 9. In addition, a side surface view diagram for describing the ceiling surface 50a of the heat storage vessel 50 and a support structure of the gas refrigerant connection piping 45 is show in Fig. 10. Furthermore, a perspective diagram illustrating the surroundings of a piping attachment opening 50x in the ceiling surface 50a of the heat storage vessel 50 is show in Fig. 11, and a side surface view diagram illustrating the surroundings of the piping attachment opening 50x in the ceiling surface 50a of the heat storage vessel 50 is show in Fig. 12.

The gas refrigerant connection piping 45 which is connected with the heat storage heat exchanger 42 is arranged and supported so that the ceiling surface 50a of the heat storage vessel 50 penetrates in the vertical direction which is a plate thickness direction as shown in Fig. 9 and Fig. 10.

A piping attachment opening 50x, which penetrates with a circular shape in the vertical direction which is the plate thickness direction, is formed in the ceiling surface 50a of the heat storage vessel 50 as shown in Fig. 11 and Fig. 12. The normal direction of the opening surface of the piping attachment opening 50x is the vertical direction. A rubber member 55 is fitted into the piping attachment opening 50x in the heat storage vessel 50. In detail, an upper portion 55a is provided so that the rubber member 55 follows the outline of an upper surface on an outer side of a portion on the circumferential edge of the piping attachment opening 50x in the heat storage vessel 50 and a lower portion 55b is provided so that the rubber member 55 follows the outline of a lower surface on an outer side of a portion on the circumferential edge of the piping attachment opening 50x in the heat storage vessel 50. The outer side of a circumferential edge portion of the piping attachment opening 50x in the heat storage vessel 50 is pinched in the plate thickness direction by the upper portion 55a and the lower portion 55b of the rubber member 55. In detail, the lower surface side of the upper portion 55a of the rubber member 55 comes into surface contact with regard to a portion on the outer side of the circumferential edge portion of the piping attachment opening 50x out of the upper surface side of the ceiling surface 50a of the heat storage vessel 50. In addition, the upper surface side of the lower portion 55b of the rubber member 55 comes into surface contact with regard to a portion on the outer side of the circumferential edge portion of the piping attachment opening 50x out of the lower surface side of the ceiling surface 50a of the heat storage vessel 50. In addition, the rubber member 55 has a cylindrical portion 55x which extends in the vertical direction which is also the same as the axial direction with a center circle which is the same as the piping attachment opening 50x in the ceiling surface 50a of the heat storage vessel 50. The cylindrical portion 55x of the rubber member 55 is formed so that an inner circumferential portion of the upper portion 55a and an inner circumferential portion of the lower portion 55b in the rubber member 55 are integral due to being linked in the vertical direction. Here, the inner diameter of the cylindrical portion 55x of the rubber member 55 is configured as to be the same as the outer diameter of the gas refrigerant connection piping 45. Due to this, it is possible to improve hermetic sealing of an inner section of the heat storage vessel 50.

The gas refrigerant connection piping 45 which is connected to the heat storage heat exchanger 42 is arranged so that an inner side of the cylindrical portion 55x of the rubber member 55 in the radial direction extends in the vertical direction at an inner side of the piping attachment opening 50x in the ceiling surface 50a of the heat storage vessel 50 as shown in Fig. 9 and Fig. 10. Here, the bonding body 62 is attached to the gas refrigerant connection piping 45 with a shape which extends along the axial direction of the gas refrigerant connection piping 45 while covering the outer circumference of the gas refrigerant connection piping 45. The nut 61 is screwed in from the outer side in the radial direction at an upper portion of the bonding body 62. Here, the washer 63 is arranged between the nut 61 and a lower end section of the bonding body 62. With the configuration described above, the gas refrigerant connection piping 45 is supported and fixed due to a lower end portion of the bonding body 62 being arranged below the ceiling surface 50a of the heat storage vessel 50, the washer 63 being arranged above the ceiling surface 50a of the heat storage vessel 50, and the nut 61 being arranged to be positioned above the washer 63. The structure of these portions will be described in detail below.

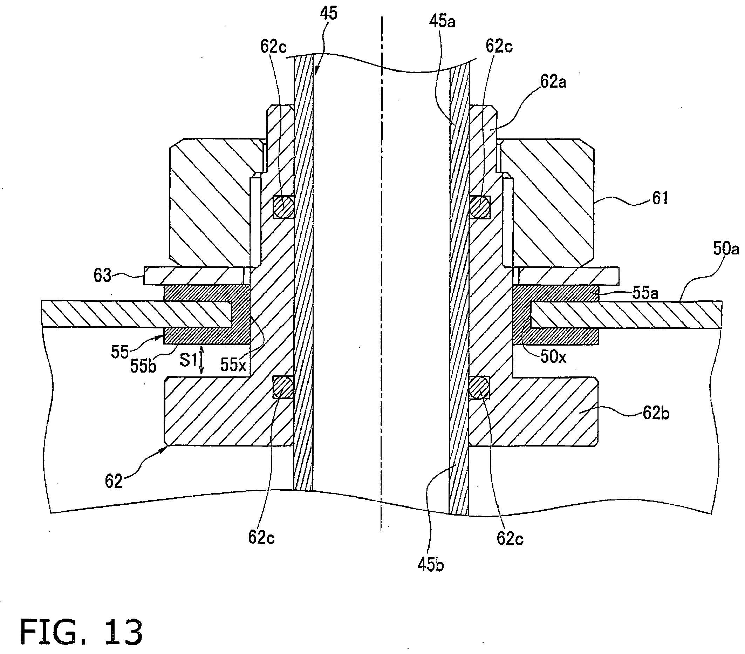

A side surface view cross sectional diagram illustrating the surroundings of the piping attachment opening 50x in the ceiling surface 50a of the heat storage vessel 50 in a state where the gas refrigerant connection piping 45 moves upward is shown in Fig. 13.

The bonding body 62 has a cylindrical section 62a, a diameter expansion section 62b, and O rings 62c. The cylindrical section 62a has a shape where the inner diameter, which is substantially the same as the outer diameter of the gas refrigerant connection piping 45, extends in the axial direction, the diameter expansion section 62b is linked with a lower end portion, and a screw groove (which is not shown in the diagrams) for screwing in the nut 61 is provided at an outer side in the radial direction. Here, the outer diameter at a lower end portion of the cylindrical section 62a is equal to or more than the outer diameter of the screw groove and the outer diameter at an upper end portion of the cylindrical section 62a is less than the outer diameter of the screw groove. In the cylindrical section 62a, the length of the lower end portion, where the outer diameter is equal to or more than the outer diameter of the screw groove, in the axial direction is longer than the total of the plate thickness of the washer 63 and the length of the rubber member 55 in the axial direction. The diameter expansion section 62b is provided at a lower end of the bonding body 62 and the inner diameter of the diameter expansion section 62b is the same as the cylindrical section 62a. The outer diameter of the diameter expansion section 62b is larger than a portion of the cylindrical section 62a where the outer diameter is the largest and spreads out in the horizontal direction to be even larger than the inner diameter of the piping attachment opening 50x which is provided in the ceiling surface 50a of the heat storage vessel 50. Here, in the present embodiment, the outer diameter of the diameter expansion section 62b is substantially the same size as the outer diameter of the rubber member 55. In addition, as shown in Fig. 13, the diameter expansion section 62b of the bonding body 62 is positioned at an inner section of the heat storage vessel 50 so that an upper surface of the diameter expansion section 62b is flush with a lower surface of the ceiling surface 50a of the heat storage vessel 50. In addition, the cylindrical section 62a of the bonding body 62 is positioned to span between the inside and outside of the heat storing vessel 50 so that a lower end of the cylindrical section 62a is positioned below the ceiling surface 50a of the heat storage vessel 50 and an upper end of the cylindrical section 62a is above the ceiling surface 50a of the heat storage vessel 50. Circumferential grooves which spreads out to the outer side in the radial direction are formed in two location of above and below in a portion of the inner circumference of the cylindrical section 62a.

The O rings 62c are accommodated so as to fit into spaces in each of the circumferential grooves which are provided in a portion of the inner circumference of the cylindrical section 62a. The O rings 62c are annular members where the cross section is a circular shape and are arranged so that inner sides of the O rings 62c in the radial direction come into contact with the outer circumference surface of the gas refrigerant connection piping 45 and outer sides of the O rings 62c in the radial direction come into contact with a portion of the circumferential grooves of the cylindrical section 62a at an outer side in the radial direction.

The washer 63 is an annular member where the axial direction is the same as the axial direction of the cylindrical section 62a and has an upper surface portion and a lower surface portion. The inner diameter of the washer 63 is larger than the outer diameter of the lower end portion of the cylindrical section 62a of the bonding body 62 and is smaller than the outer diameter of the nut 61 and the outer diameter of the rubber member 55. The washer 63 is arranged so that the upper surface of the washer 63 touches with the lower surface of the nut 61 and so that the lower surface of the washer 63 touches with the upper surface of the upper portion 55a of the rubber member 55 which is provided in the ceiling surface 50a of the heat storage vessel 50. Here, the washer 63 is provided in a state where it is able to move freely in the axial direction without being screwed in with regard to the cylindrical section 62a of the boding body 62.

The inner diameter of the nut 61 is larger than an end section on the upper end side of the cylindrical section 62a of the boding body 62 and is screwed in via the screw groove which is provided in the cylindrical section 62a of the boding body 62 so that the cylindrical section 62a of the binding body 62 is fastened from the outer side in the radial direction. By fastening the nut 61 with regard to the cylindrical section 62a of the boding body 62 in this manner, the cylindrical section 62a of the boding body 62 changes shape on the inner side of the radial direction and the bonding body 62 is fixed with regard to the gas refrigerant connection piping 45 via each of the O rings 62c and the like.

As above, since the cylindrical section 62a is provided so that the length of the lower end portion, where the outer diameter is equal to or more than the outer diameter of the screw groove, in the axial direction is longer than the total of the plate thickness of the washer 63 and the length of the rubber member 55 in the axial direction, the length in the vertical direction between the upper surface of the diameter expansion section 62b of the bonding body 62 and the lower surface of the washer 63 which are fixed with regard to the gas refrigerant connection piping 45 is longer than the length in the vertical direction of the rubber member 55 which is provided in the piping attachment opening 50x in the ceiling surface 50a of the heat storage vessel 50. Due to this, it is possible for there to be a gap between the upper surface of the diameter expansion section 62b of the bonding body 62 and the lower surface of the lower portion 55b of the rubber member 55 and/or between the lower surface of the washer 63 and the upper surface of the upper portion 55a of the rubber member 55.

Here, details of the first liquid refrigerant connection piping 46 and the second liquid refrigerant connection piping 47 are omitted but the first liquid refrigerant connection piping 46 and the second liquid refrigerant connection piping 47 are supported by the ceiling surface 50a of the heat storage vessel 50 in the same manner as the support structure of the gas refrigerant connection piping 45 described above.

### (7) Support Structure of Gas Refrigerant Connection Piping

Since the lower end portion of the heat storage heat exchanger 42 is supported by the bottom surface 50b of the heat storage vessel 50 using the lower end support member 53 and the plurality of ribs 54 as described above in Fig. 3, the gas refrigerant connection piping 45 which is connected to an upper end of the heat storage heat exchanger 42 moves vertically upward in a case where the heat storage heat exchanger 42 thermally expands. Here, the heat storage heat exchanger 42 thermally expands also with regard to the horizontal direction, but since the heat storage heat exchanger 42 is arranged so that the longitudinal direction of the transfer heat pipes 42a is the vertical direction, effects of thermal expansion is mainly generated in the vertical direction. In addition, the gas refrigerant connection piping 45 moves vertically downward in a case where the heat storage heat exchanger 42 thermally contracts. Here, slight thermal expansion is generated in the heat storage vessel 50 itself, but the linear thermal expansion coefficient of a material (mainly polypropylene in the present embodiment) which configures the heat storage vessel 50 is different to the linear thermal expansion coefficient of metal which configures the heat storage heat exchanger 42 and the gas refrigerant connection piping 45 and is small, and since a flow of air is generated in the outer circumference in the heat storage vessel 50 and the degree to which temperature increases is also different, movement of the gas refrigerant connection piping 45 is generated as described above.

As shown in Fig. 13, in a case where refrigerant does not flow in the heat storage circuit 40 and the heat storing material P is at room temperature, the heat storage heat exchanger 42 and the gas refrigerant connection piping 45 hardly thermally expand and the portion, which passes through the ceiling surface 50a of the heat storage vessel 50, in the gas refrigerant connection piping 45 is positioned below in the vertical direction and the washer 63 is in a state of being interposed by the lower surface of the nut 61 and the upper surface of the upper portion 55a of the rubber member 55 in the vertical direction. That is, there is a state where there is a gap between the upper surface of the diameter expansion section 62b of the bonding body 62 and the lower surface of the lower portion 55b of the rubber member 55 in a portion shown by S1 in Fig. 13.

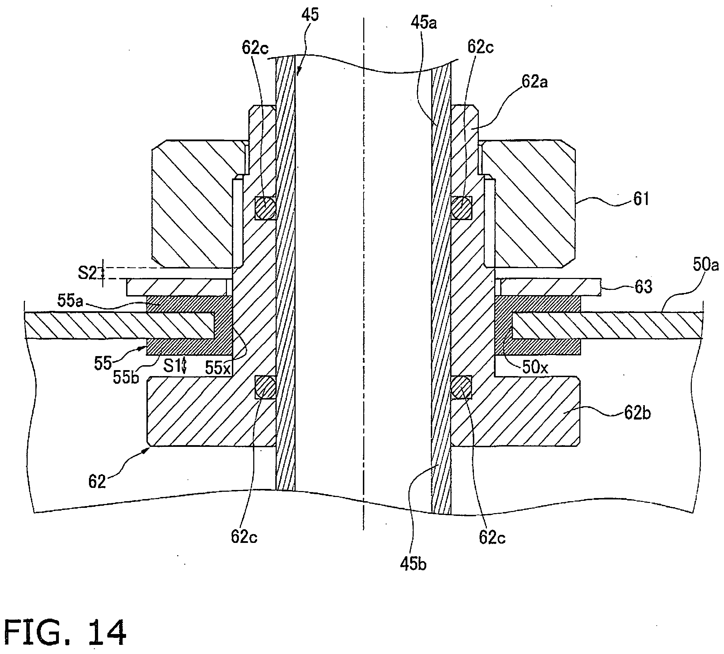

In contrast to this, in a case where high temperature refrigerant flows in the heat storage circuit 40 and the heat storing material P is in a state where heat is stored, the heat storage heat exchanger 42 and the gas refrigerant connection piping 45 thermally expand and the portion, which passes through the ceiling surface 50a of the heat storage vessel 50, in the gas refrigerant connection piping 45 is positioned above in the vertical direction as shown in Fig. 14. In this manner, it is difficult for the gas refrigerant connection piping 45 to receive thermal stress from the ceiling surface 50a of the heat storage vessel 50 due to the length in the vertical direction of the gap between the upper surface of the diameter expansion section 62b of the bonding body 62 and the lower surface of the lower portion 55b of the rubber member 55 being smaller even in a case where thermal expansion is generated such that the gas refrigerant connection piping 45 moves upward. That is, the position of the nut 61 which is screwed into the diameter expansion section 62b of the bonding body 62 and the cylindrical section 62a of the bonding body 62 moves upward in accompaniment with the position of the gas refrigerant connection piping 45 moving upward as shown in Fig. 14 in a case where the heat storage heat exchanger 42 and the gas refrigerant connection piping 45 thermally expand. Here, the washer 63 does not move upward due to the action of its own weight and the lower surface of the washer 63 is maintained in a state of being in contact with the upper surface of the upper portion 55a of the rubber member 55. In addition, the ceiling surface 50a of the heat storage vessel 50 and the rubber member 55 which is attached to the piping attachment opening 50x in the ceiling surface 50a do not move. For this reason, there is a state where there is a gap between the lower surface of the nut 61 and the upper surface of the washer 63 while the length in the vertical direction of the gap between the upper surface of the diameter expansion section 62b of the bonding body 62 and the lower surface of the lower portion 55b of the rubber member 55 is shorter as shown in Fig. 14. Here, comparing a state where thermal expansion is not generated in Fig. 13 and a state where thermal expansion is generated in Fig. 14, there is the length in the vertical direction of the gap between the lower surface of the nut 61 and the upper surface of the washer 63 to the extent that the length in the vertical direction of the gap between the upper surface of the diameter expansion section 62b of the bonding body 62 and the lower surface of the lower portion 55b of the rubber member 55 is shorter, and the value of the length in the vertical direction of the gap which is the portion shown by S1 in Fig. 13 is equal to the total values of the length in the vertical direction of the gap which is the portion shown by S1 in Fig. 14 and the length in the vertical direction of the gap which is the po
rtion shown by S2 in Fig. 14.

As above, it is possible for it to be difficult for the ceiling surface 50a of the heat storage vessel 50 to receive stress from the gas refrigerant connection piping 45 and it is possible for it to be difficult for the gas refrigerant connection piping 45 to receive stress from the ceiling surface 50a of the heat storage vessel 50 even when the gas refrigerant connection piping 45 moves vertically upward with regard to the ceiling surface 50a of the heat storage vessel 50.

In addition, a case where thermal contraction is generated after thermal expansion and the gas refrigerant connection piping 45 moves vertically downward with regard to the ceiling surface 50a of the heat storage vessel 50 is the same.

### (8) Height Positional Relationship of Upper End U Pipe of Heat Storage Heat Exchanger and Upper End of Heat Storing Material in Solid State

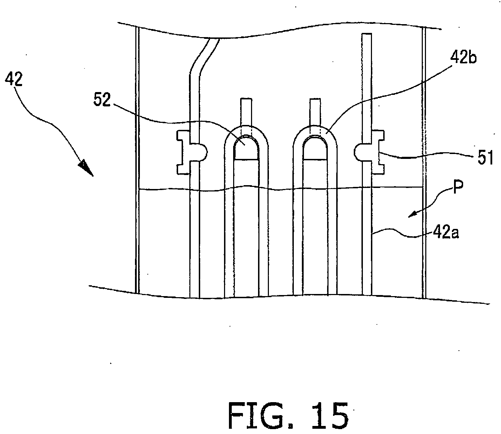

The heat storing material P which is filled in the heat storage vessel 50 is arranged so that the upper end U pipe 42b of the heat storage heat exchanger 42 is positioned above the upper end portion of the heat storing material P even in a case where the heat storing material P is in a solid state as shown in Fig. 15.

Here, in a case where refrigerant does not flow in the heat storage circuit 40 and the heat storing material P is at room temperature, the heat storage heat exchanger 42 hardly thermally expand and the lower end U pipe 42b of the heat storage heat exchanger 42 is in a state where the upper end portion at the inner side is supported from below using the inner side support member 52 as shown by Fig. 15. Here, due to being supported by the side surfaces of the heat storage vessel 50, both sides of the inner side support member 52 in the longitudinal direction do not move even when the heat storage heat exchanger 42 thermally expands. In addition, the vicinity of the upper end of the plurality of heat transfer pipes 42a, which are arranged on the outer side in the heat storage heat exchanger 42, are supported so as to be bunched from the outer side using the outer side support member 51. Due to being supported by the side surfaces of the heat storage vessel 50, both sides of the outer side support member 51 in the longitudinal direction do not move even when the heat storage heat exchanger 42 thermally expands in the same manner as the inner side support member 52.

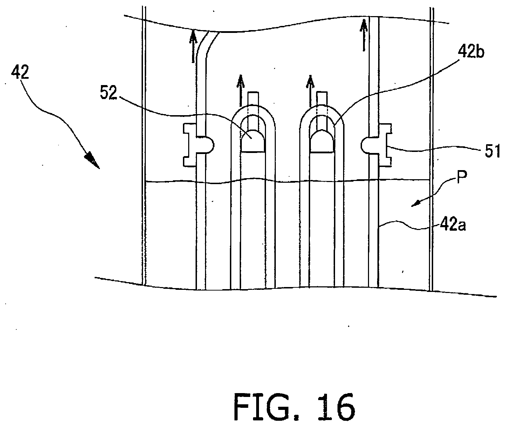

In contrast to this, in a case where high temperature refrigerant flows in the heat storage circuit 40 and the heat storing material P is in a state where heat is stored, the heat transfer pipe 42a and the lower end U pipe 42b of the heat storage heat exchanger 42 moves upward by the heat storage heat exchanger 42 thermally expanding as shown by the arrows in Fig. 16. In this case, the lower end U pipe 42b of the heat storage heat exchanger 42 moves so as to separate upward from the inner side support member 52 as shown in Fig. 16. In addition, the heat transfer pipe 42a of the heat storage heat exchanger 42 moves toward the vertical direction which is the axial direction mainly without any changes where the support state due to the outer side support member 51 is maintained.

In this manner, since the filling amount of the heat storing material P in the heat storage vessel 50 is adjusted so that the upper end of the heat storing material P in the solid state is positioned below the lower end U pipe 42b of the heat storage heat exchanger 42 even in a case where the lower end U pipe 42b of the heat storage heat exchanger 42 moves toward vertically upward due to thermal expansion, there is none of the heat storing material P which is in a solid state above the lower end U pipe 42b when the lower end U pipe 42b of the heat storage heat exchanger 42 moves upward due to thermal expansion being generated. For this reason, it is possible to avoid thermal stress being generated between the heat storage heat exchanger 42 and the heat storing material P which is in a solid state. In addition, since the filling amount of the heat storing material P in the heat storage vessel 50 is adjusted so that the upper end of the heat storing material P in the solid state is positioned below the upper end U pipe 42b of the heat storage heat exchanger 42 even in a case where the upper end U pipe 42b of the heat storage heat exchanger 42 moves toward vertically downward due to thermal contraction, there is none of the heat storing material P which is in a solid state below the upper end U pipe 42b when the upper end U pipe 42b of the heat storage heat exchanger 42 moves downward due to thermal contraction being generated. For this reason, it is possible to avoid thermal stress being generated between the heat storage heat exchanger 42 and the heat storing material P which is in a solid state.

### (9) Features of Present Embodiment

### (9-1)

In the air conditioner 1 of the present embodiment, the gas refrigerant connection piping 45 is provided to move freely in the plate thickness direction with regard to the ceiling surface 50a of the heat storage vessel 50. For this reason, it is possible for it to be difficult for thermal stress to be received from the ceiling surface 50a of the heat storage vessel 50 even when the position of the gas refrigerant connection piping 45 moves upward with regard to the ceiling surface 50a of the heat storage vessel 50 due to the heat storage heat exchanger 42 and the gas refrigerant connection piping 45 thermally expanding. For this reason, it is difficult for metal fatigue to be generated in the gas refrigerant connection piping 45 and the heat storage heat exchanger 42 which is connected to the gas refrigerant connection piping 45 even when thermal expansion and thermal contraction of the gas refrigerant connection piping 45 and the heat storage heat exchanger 42 is repeated due to heat storing in the heat storing material P and heat releasing from the heat storing material P being repeated. The point is the same for the first liquid refrigerant connection piping 46 and the second liquid refrigerant connection piping 47.

### (9-2)

In the air conditioner 1 of the present embodiment, it is possible to improve hermetic sealing of the inner section of the heat storage vessel 50 by configuring the inner diameter of the cylindrical portion 55x of the rubber member 55 to be the same as the outer diameter of the gas refrigerant connection piping 45. Moreover, the gas refrigerant connection piping 45 is provided so as to penetrate with regard to the ceiling surface 50a of the heat storage vessel 50 in the vertical direction and the gas refrigerant connection piping 45 is also provided so that the axial direction of both of the cylindrical portion 55x of the rubber member 55 and the cylindrical section 62a of the bonding body 62 is the vertical direction. For this reason, a state where the outer circumference surface of the gas refrigerant connection piping 45 normally comes into contact with the inner circumference surface of the cylindrical portion 55x of the rubber member 55 is maintained even in a case of moving in the vertical direction with regard to the ceiling surface 50a of the heat storage vessel 50 due to the heat storage heat exchanger 42 and the gas refrigerant connection piping 45 thermally expanding. For this reason, it is possible to favorably maintain sealing between the ceiling surface 50a of the heat storage vessel 50 and the gas refrigerant connection piping 45 even in either state of the heat storage heat exchanger 42 and the gas refrigerant connection piping 45 thermally expanding or thermally contracting. In particular, it is easy to favorably maintain close attachment between the rubber member 55 and the gas refrigerant connection piping 45 due to the rubber member 55 elastically changing shape since the rubber member 55 is configured using rubber. Due to this, it is possible to favorably maintain hermetic sealing of the inner section of the heat storage vessel 50 and it is possible to suppress deterioration of the heat storing material P and leaking of the heat storing material P due to volatilization.

### (9-3)

In the air conditioner 1 of the present embodiment, the filling amount of the heat storing material P in the heat storage vessel 50 is adjusted so that the upper end of the heat storing material P in a case where the heat storing material P is in a solid state is positioned below the upper end U pipe 42b of the heat storage heat exchanger 42. For this reason, it is possible to avoid thermal stress being generated between the heat storing material P which is in a solid state and the heat storage heat exchanger 42 even in a case where the upper end U pipe 42b of the heat storage heat exchanger 42 moves in the vertical direction due to thermal expansion or thermal contraction.

### (9-4)

In the air conditioner 1 of the present embodiment, a heat storing material which is a type where the volume changes during transition between phases is used as the heat storing material P in the heat storages vessel 50. Moreover, the heat storing material P and the outer surface of each portion of the heat storage heat exchanger 42 are arranged to be in direct contact. For this reason, there are times when the heat storage heat exchanger 42 and the gas refrigerant connection piping 45 moves so as to be shifted in the vertical direction due to being caused by changes in the volume of the heat storing material P during transitions between phases. In this manner, it is possible for it to be difficult for thermal stress to be received from the ceiling surface 50a of the heat storage vessel 50 even in a case where the positional relationship between the gas refrigerant connection piping 45 and the ceiling surface 50a of the heat storage vessel 50 changes due to being caused by changes in the volume of the heat storing material P during transition in phases.

### (9-5)

In the air conditioner 1 of the present embodiment, the longitudinal direction of the heat transfer pipes 42a which are straight pipes in the heat storage heat exchanger 42 are arranged in the vertical direction. For this reason, it is mainly the length in the vertical direction which changes in a case where the heat storage heat exchanger 42 thermally expands. Even in this case, it is possible to effectively suppress generating of distortion due to thermal stress by adopting the configuration where movement of the gas refrigerant connection piping 45 is permitted in the vertical direction with regard to the ceiling surface 50a of the heat storage vessel 50.

### (9-6)

In the air conditioner 1 of the present embodiment, it is possible for either of the indoor heat exchangers 71 and 81 in the indoor units 7 and 8 to continuously function as condensers for refrigerant even during driving for heating and heat storing where heat is accumulated in the heat storing material P and even during driving for heating and defrosting which uses heat which is stored in the heat storing material P. For this reason, it is possible to continuously perform driving for heating.

### (10) Other Embodiments

The embodiment described above may be appropriately modified, for example, as follows, within a scope which does not depart from the gist of the present invention.

### (10-1)

A case where polyethylene glycol dissolved in water is used as the heat storing material P is described in the embodiment described above as an example.

In contrast to this, for example, the heat storing material P is not limited to this and the heat storing material P may have, for example, a melting point where phase change is generated between states of a solid and a liquid when heat storing and heat releasing are performed. The heat storing material P may be threitol, paraffin, sodium acetate trihydrate, sodium sulfate decahydrate, and the like.

### (10-2)

A case, where thermal stress escapes using the gap between the upper surface of the diameter expansion section 62b of the bonding body 62 and the lower surface of the rubber member 55 in a case where the heat storage heat exchanger 42 and the gas refrigerant connection piping 45 thermally expand, is described in the embodiment described above as an example.

In contrast to this, for example, when the heat storage heat exchanger 42 and the gas refrigerant connection piping 45 thermal expands even more and the gas refrigerant connection piping 45 moves upward even more, there is no gap between the upper surface of the diameter expansion section 62b of the bonding body 62 and the lower surface of the rubber member 55, and there is a state where a force which pushes upward is applied to the rubber member 55 and a force which pushes downward is applied to the gas refrigerant connection piping 45 due to the upper surface of the diameter expansion section 62b of the bonding body 62 touching with the lower surface of the rubber member 55.

Even in this case, the force which works to push up the rubber member 55 acts equally from the upper surface of the diameter expansion section 62b of the bonding body 62 with regard the lower portion 55b of the rubber member 55 due to the rubber member 55 elastically changing shape. Moreover, it is possible for the ceiling surface 50a of the heat storage vessel 50 to slightly bend. Due to this, it is possible for damage which is generated in the gas refrigerant connection piping 45 to be suppressed to be minimal by avoiding thermal stress being locally generated even in a case where the extent of thermal expansion is large.

Moreover, since the rubber member 55 which is provided in the ceiling surface 50a of the heat storage vessel 50 is sandwiched between the diameter expansion section 62b of the bonding body 62 and the nut 61 in the up and down direction via the gap, it is possible to prevent the gas refrigerant connection piping 45 from moving excessively upward and moving excessively downward.

### (10-3)

A case, where the lower end portion of the heat storage heat exchanger 42 is supported by the bottom surface 50b of the heat storage vessel 50 using the lower end support member 53 and the plurality of ribs 54, is described in the embodiment described above as an example.

In contrast to this, a heat storing member, which is, for example, normally in a solid state but is able to store heat and where thermal expansion is generated, may be further provided separately to the heat storing material P. Then, the lower end portion of the heat storage heat exchanger 42 may be supported using this heat storing member. In this case, the effects of an arrangement configuration where stress escapes in the embodiment described above is remarkable since the heat storage heat exchanger 42 is pushed upward due to the heat storing member itself thermally expanding.

### (10-4)

A case, where the filling amount of the heat storing member P in the heat storage vessel 50 is adjusted so that the upper end of the heat storing material P in a case where the heat storing material P is in a solid state is positioned below the upper end U pipe 42b of the heat storage heat exchanger 42, is described in the embodiment described above as an example.

In contrast to this, the filling amount of the heat storing member P in the heat storage vessel 50 may be adjusted so that the upper end of the heat storing material P which is in a solid state is at the same level or below the upper end of the heat transfer pipes 42a which are the straight pipes in the heat storage heat exchanger 42. Since the heat storage heat exchanger 42 is arranged so that the longitudinal direction of the heat transfer pipes 42a which are straight pipes is the vertical direction, movement during thermal expansion is mainly in the vertical direction. For this reason, it is possible for stress to be hardly generated with regard to the heat storing material P in a solid state which is in the vicinity due to each of the heat transfer pipes 42a extending in the axial direction even if only a portion of the heat transfer pipes 42a which are the straight pipes in the heat storage heat exchanger 42 are covered by the heat storing material P in the solid state.

### (10-5)

A case, where the lower end portion of the heat storage heat exchanger 42 is supported by the bottom surface 50b of the heat storage vessel 50 using the lower end support member 53 and the plurality of ribs 54, is described in the embodiment described above as an example.

In contrast to this, for example, the heat storage heat exchanger 42 may be supported by a side surface of the heat storage vessel 50 via the outer side support member 51 and the inner side support member 52 without the lower end of the heat storage heat exchanger 42 being supported by the bottom surface 50b of the heat storage vessel 50 in a state where driving is stopped.

### INDUSTRIAL APPLICABILITY

The present invention is particularly effective in a heat storage heat exchange device which is provided with a heat storage heat exchanger in order for it to be possible to reduce thermal stress which is imparted to a connection portion of a casing and refrigerant piping which is connected to a heat storage heat exchanger while maintaining sealing of heat storing material in the casing.

### REFERENCE SIGNS LIST

1 AIR CONDITIONER
21 FIRST FOUR-WAY SWITCHING VALVE
22 SECOND FOUR-WAY SWITCHING VALVE
23 COMPRESSOR
23a OIL DIVIDER
24 OUTDOOR HEAT EXCHANGER
26 OUTDOOR EXPANSION VALVE
27 ACCUMULATOR
30 SUPER COOLING CIRCUIT
40 HEAT STORAGE CIRCUIT
41 HEAT STORAGE DEVICE (HEAT STORAGE HEAT EXCHANGER DEVICE)
42 HEAT STORAGE HEAT EXCHANGER
42a HEAT TRANSFER PIPE (STRAIGHT PIPE)
42b UPPER END U PIPE (U PIPE)
42c LOWER END U PIPE
50 HEAT STORAGE VESSEL (CASING)
50x PIPING ATTACHMENT OPENING
55 RUBBER MEMBER (SEALING MEMBER)
61 NUT (STOPPER MEMBER)
62b DIAMETER EXPANSION SECTION (STOPPER MEMBER)
63 WASHER (STOPPER MEMBER)
71, 81 INDOOR HEAT EXCHANGER
73, 83 INDOOR EXPANSION VALVE

### CITATION LIST

### PATENT LITERATURE

[Patent Document 1] Japanese Unexamined Patent Application Publication No. 2008-64372

## Claims

1. A heat storage heat exchange device (41) comprising:
a casing (50) in which a piping attachment opening (50x) is formed;
a heat storage heat exchanger (42) arranged at an inner section of the casing;
a heat storing material (P) provided in an inner section of the casing at an outer side of the heat storage heat exchanger (42);
a refrigerant piping (45, 46, 47) connected with the heat storage heat exchanger and extended from an inner section of the casing (50) to an outer section of the casing by passing through the piping attachment opening (50x) in the casing; and
a sealing member (55) configured to seal between the piping attachment opening (50x) in the casing (50) and the refrigerant piping (45, 46, 47),
wherein the refrigerant piping (45, 46, 47) is not fixed with regard to the sealing member (55) and is configured so that movement in a direction of passing through the pipe attachment opening (50x) in the casing is free; and
wherein the heat storing material (P) has a melting point where phase change is generated between a solid and a liquid during storing heat and releasing heat in the heat storage heat exchanger;
**characterised in that**
the heat storage heat exchanger (42) has a plurality of straight pipes (42a) which extends in a vertical direction and a U pipe (42b) which connects upper end sections of the straight pipes, and
an upper end of the U pipe in the heat storage heat exchanger is positioned above an upper end section of the heat storing material (P) at least in a case where the heat storing material is in a solid state.

2. The heat storage heat exchange device according to claim 1, wherein
the heat storage heat exchanger is configured to be positionally aligned with regard to a portion which is on the opposite side to the side where the piping attachment opening is formed in the casing.

3. The heat storage heat exchange device according to any one of claims 1 to 2, wherein
the tangential direction of an opening surface of the piping attachment opening in the casing is the vertical direction, and
the refrigerant piping has a cylindrical portion, the cylindrical portion including
a portion which extends vertically upward to pass through the piping attachment opening in the casing and
a portion which extends vertically downward to pass through the piping attachment opening in the casing.

4. The heat storage heat exchange device according to any one of claims 1 to 3, wherein
the heat storing material and at least a portion of the outer surface of the heat storage heat exchanger are arranged to directly contact.

5. The heat storage heat exchange device according to any one of claims 1 to 4, wherein
the sealing member is a rubber member (55) with a shape so as to pinch an edge of the piping attachment opening in the casing in a plate thickness direction, and
further comprising a stopper member (61, 62b, 63) fixed with regard to the surroundings of a portion of the refrigerant piping which is positioned in an inner section of the casing and the surroundings of another portion of the refrigerant piping which is positioned in an outer section of the casing, and configured to abut on the rubber member when the refrigerant piping moves in a direction of passing through the piping attachment opening in the case.

## Patentansprüche

1. Wärmespeicher-Wärmeaustausch-Vorrichtung (41) mit:
einem Gehäuse (50), in dem eine Rohrleitungsanschlussöffnung (50x) ausgebildet ist;
einem Wärmespeicher-Wärmetauscher (42), der an einem inneren Abschnitt des Gehäuses angeordnet ist;
einem Wärmespeichermaterial (P), das in einem inneren Abschnitt des Gehäuses an einer Außenseite des Wärmespeicher-Wärmetauschers (42) vorgesehen ist;
einer Kältemittelrohrleitung (45, 46, 47), die mit dem Wärmespeicher-Wärmetauscher verbunden ist und sich von einem inneren Abschnitt des Gehäuses (50) zu einem äußeren Abschnitt des Gehäuses erstreckt, indem sie durch die Rohrleitungsanschlussöffnung (50x) im Gehäuse geht; und
einem Dichtungselement (55), das konfiguriert ist, zwischen der Rohrleitungsanschlussöffnung (50x) im Gehäuse (50) und der Kältemittelrohrleitung (45, 46, 47) abzudichten,
wobei die Kältemittelrohrleitung (45, 46, 47) hinsichtlich des Dichtungselements (55) nicht fixiert ist und so konfiguriert ist, dass eine Bewegung in eine Richtung des Durchgangs durch die Rohrleitungsanschlussöffnung (50x) im Gehäuse frei ist; und
wobei das Wärmespeichermaterial (P) einen Schmelzpunkt aufweist, wo ein Phasenübergang zwischen einem Feststoff und einer Flüssigkeit während der Speicherung von Wärme und der Abgabe von Wärme im Wärmespeicher-Wärmetauscher erzeugt wird;
**dadurch gekennzeichnet, dass**
der Wärmespeicher-Wärmetauscher (42) eine Vielzahl von geraden Rohren (42a), die sich in einer vertikalen Richtung erstrecken, und ein U-Rohr (42b) aufweist, das obere Endabschnitte der geraden Rohre verbindet, und
ein oberes Ende des U-Rohrs im Wärmespeicher-Wärmetauscher mindestens in einem Fall, wo sich das Wärmespeichermaterial in einem festen Zustand befindet, über einem oberen Endabschnitt des Wärmespeichermaterials (P) angeordnet ist.

2. Wärmespeicher-Wärmeaustausch-Vorrichtung nach Anspruch 1, wobei
der Wärmespeicher-Wärmetauscher konfiguriert ist, bezüglich eines Abschnitts positionell ausgerichtet zu werden, der sich auf der Seite befindet, die der Seite gegenüberliegt, wo die Rohrleitungsanschlussöffnung im Gehäuse ausgebildet ist.

3. Wärmespeicher-Wärmeaustausch-Vorrichtung nach einem der Ansprüche 1 bis 2, wobei
die Tangentialrichtung einer Öffnungsfläche der Rohrleitungsanschlussöffnung im Gehäuse in die vertikale Richtung verläuft, und
die Kältemittelrohrleitung einen zylindrischen Abschnitt aufweist, wobei der zylindrische Abschnitt aufweist:
einen Abschnitt, der sich vertikal nach oben erstreckt, um durch die Rohrleitungsanschlussöffnung im Gehäuse zu gehen, und
einen Abschnitt, der sich vertikal nach unten erstreckt, um durch die Rohrleitungsanschlussöffnung im Gehäuse zu gehen.

4. Wärmespeicher-Wärmeaustausch-Vorrichtung nach einem der Ansprüche 1 bis 3, wobei das Wärmespeichermaterial und mindestens ein Abschnitt der Außenfläche des Wärmespeicher-Wärmetauschers so angeordnet sind, dass sie sich direkt berühren.

5. Wärmespeicher-Wärmeaustausch-Vorrichtung nach einem der Ansprüche 1 bis 4, wobei
das Dichtungselement ein Gummielement (55) mit einer solchen Form ist, dass es eine Kante der Rohrleitungsanschlussöffnung im Gehäuse in einer Plattendickenrichtung einklemmt, und
ferner ein Anschlagelement (61, 62b, 63) aufweist, das bezüglich der Umgebung eines Abschnitts der Kältemittelrohrleitung, der in einem inneren Abschnitt des Gehäuses angeordnet ist, und der Umgebung eines anderen Abschnitts der Kältemittelrohrleitung fixiert ist, die in einem äußeren Abschnitt des Gehäuses angeordnet ist, und konfiguriert ist, auf dem Gummielement aufzuliegen, wenn sich die Kältemittelrohrleitung in eine Richtung des Durchgang durch die Rohrleitungsanschlussöffnung im Gehäuse bewegt.

## Revendications

1. Dispositif d'échange de chaleur à stockage de chaleur (41) comprenant :
un carter (50) où est formée une ouverture de montage de conduite (50x) ;
un échangeur de chaleur à stockage de chaleur (42) disposé à l'intérieur du carter ;
un matériau accumulateur de chaleur (P) prévu à l'intérieur du carter, sur une face extérieure de l'échangeur de chaleur à stockage de chaleur (42) ;
une tuyauterie de réfrigérant (45, 46, 47) raccordée à l'échangeur de chaleur à stockage de chaleur et s'étendant de l'intérieur du carter (50) à l'extérieur du carter en passant par l'ouverture de montage de conduite (50x) du carter ; et
un élément de joint (55) prévu pour réaliser une étanchéité entre l'ouverture de montage de conduite (50x) du carter (50) et la tuyauterie de réfrigérant (45, 46, 47), où la tuyauterie de réfrigérant (45, 46, 47) n'est pas fixée par rapport à l'élément de joint (55) et étant prévue de manière à assurer une liberté de mouvement dans la direction de passage dans l'ouverture de montage de conduite (50x) du carter ; et
où le matériau accumulateur de chaleur (P) présente un point de fusion où un changement de phase entre solide et liquide est généré pendant l'accumulation de chaleur et la libération de chaleur dans l'échangeur de chaleur à stockage de chaleur ;
**caractérisé en ce que**
l'échangeur de chaleur à stockage de chaleur (42) comprend une pluralité de tubulures droites (42a) s'étendant en direction verticale, et une tubulure en U (42b) reliant les parties d'extrémité supérieure des tubulures droites, et
une extrémité supérieure de la tubulure en U dans l'échangeur de chaleur à stockage de chaleur est située au-dessus d'une partie d'extrémité supérieure du matériau accumulateur de chaleur (P), au moins dans le cas où le matériau accumulateur de chaleur est dans un état solide.

2. Dispositif d'échange de chaleur à stockage de chaleur selon la revendication 1, où
l'échangeur de chaleur à stockage de chaleur est prévu pour être positionné en alignement avec une partie sur le côté opposé à celui où l'ouverture de montage de conduite est formée dans le carter.

3. Dispositif d'échange de chaleur à stockage de chaleur selon
la revendication 1 ou la revendication 2, où
la direction tangentielle à la surface d'ouverture de l'ouverture de montage de conduite du carter est la direction verticale, et
la tuyauterie de réfrigérant comporte une partie cylindrique, ladite partie cylindrique comprenant une section qui s'étend verticalement vers le haut pour passer dans l'ouverture de montage de conduite du carter et
une section qui s'étend verticalement vers le bas pour passer dans l'ouverture de montage de conduite du carter.

4. Dispositif d'échange de chaleur à stockage de chaleur selon l'une des revendications 1 à 3, où
le matériau accumulateur de chaleur et au moins une partie de la surface extérieure de l'échangeur de chaleur à stockage de chaleur sont disposées de manière à être en contact direct.

5. Dispositif d'échange de chaleur à stockage de chaleur selon l'une des revendications 1 à 4, où
l'élément de joint est un élément en caoutchouc (55) ayant une forme permettant le pincement d'un bord de l'ouverture de montage de conduite du carter dans le sens de l'épaisseur de la plaque, et
comprenant en outre un élément d'arrêt (61, 62b, 63) fixé autour d'une partie de la tuyauterie de réfrigérant disposée à l'intérieur du carter, et autour d'une autre partie de la tuyauterie de réfrigérant disposée à l'extérieur du carter, et prévu pour buter contre l'élément en caoutchouc quand la tuyauterie de réfrigérant bouge dans la direction de passage dans l'ouverture de montage de conduite du carter.
